(19) Europäisches Patentamt
European Patent Office
Office européen des brevets

(11) **EP 3 221 411 B1**

(12) **EUROPÄISCHE PATENTSCHRIFT**

(45) Veröffentlichungstag und Bekanntmachung des Hinweises auf die Patenterteilung:
**08.01.2020  Patentblatt 2020/02**

(21) Anmeldenummer: **15786976.9**

(22) Anmeldetag: **29.10.2015**

(51) Int Cl.:
*C09J 7/38* (2018.01)          *C09J 7/21* (2018.01)
*C09J 133/06* (2006.01)        *C09J 133/20* (2006.01)
*C09J 11/04* (2006.01)         *B60R 16/02* (2006.01)

(86) Internationale Anmeldenummer:
**PCT/EP2015/075087**

(87) Internationale Veröffentlichungsnummer:
**WO 2016/078888 (26.05.2016 Gazette 2016/21)**

(54) **MODIFIZIERTE SCHICHTSILIKATE ZUR STEUERUNG DER ABROLLKRAFT VON HAFTKLEBEMASSEN UND VERBESSERUNG DER BARRIEREEIGENSCHAFTEN VON KLEBEBÄNDERN**

MODIFIED PHYLLOSILICATES FOR CONTROLLING THE UNWINDING FORCE OF PRESSURE-SENSITIVE ADHESIVE MATERIALS AND IMPROVING THE BARRIER PROPERTIES OF ADHESIVE TAPES

PHYLLOSILICATES MODIFIÉS POUR COMMANDER LA FORCE DE DÉROULEMENT DE MATIÈRES ADHÉSIVES ET AMÉLIORER LES PROPRIÉTÉS DE BARRIÈRE DE BANDES ADHÉSIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2014   DE 102014223451**

(43) Veröffentlichungstag der Anmeldung:
**27.09.2017   Patentblatt 2017/39**

(73) Patentinhaber: **tesa SE**
**22848 Norderstedt (DE)**

(72) Erfinder:
• **BÖHM, Nicolai**
**22559 Hamburg (DE)**

• **MIES, Michel**
**20146 Hamburg (DE)**
• **SEITZER, Dennis**
**72800 Eningen unter Achalm (DE)**
• **WIENKE, Daniel**
**22455 Hamburg (DE)**

(74) Vertreter: **Stubbe, Andreas**
**tesa SE**
**Kst. 9500**
**Hugo-Kirchberg-Strasse 1**
**22848 Norderstedt (DE)**

(56) Entgegenhaltungen:
EP-A1- 2 695 926          EP-A2- 2 143 774
WO-A1-2014/097694        WO-A2-02/24756
WO-A2-2012/048128        JP-A- 2006 316 085

**Beschreibung**

Gegenstand der Erfindung ist die Verwendung von Klebebändern zum Ummanteln von langgestrecktem Gut wie insbesondere Kabelsätzen in Automobilen, wobei das Klebeband einen Träger und eine auf mindestens einer Seite des Trägers aufgebrachte Haftklebemasse aufweist.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification). Im Folgenden werden diese Normen verkürzt mit LV 312 beziehungsweise mit Ford-Spezifikation bezeichnet.

Verbreitet sind Kabelwickelbänder mit Folien- und Textilträger, die in der Regel einseitig mit unterschiedlichen Haftklebemassen beschichtet sind. Diese Kabelwickelbänder müssen vier Hauptanforderungen erfüllen.

a. leichte Abwickelbarkeit:

Das in Rollenform dargereichte Produkt muss für eine einfache Verarbeitung leicht abwickelbar sein, um einen Körper gewickelten Klebeband - die Neigung eines Klebebandendes verstanden abzustehen. Die Ursache ergibt sich aus der Kombination von Haltekraft durch den Klebstoff, der Steifigkeit des Trägers und des Durchmessers des Kabelsatzes. An die Verklebung/Bandagierung, die sich unter keinen Umständen wieder lösen darf, werden höchste Anforderungen an ein ausgewogenes Verhältnis von Kohäsion und Adhäsion gestellt, denn in der Praxis dürfen sich Klebebandenden nicht selbsttätig ablösen.

b. Kabelverträglichkeit:

Die Kabelisolierung darf nicht durch den Einfluss des Klebebandes in Kombination mit erhöhter Temperatur über längeren Zeitraum verspröden. Unterschieden wird hier nach der LV 312 zwischen vier Temperaturklassen T1 bis T4, entsprechend 80 °C (auch Temperaturklasse A genannt), 105 °C (auch Temperaturklasse B (105) genannt), 125 °C (auch Temperaturklasse C genannt) und 150 °C (auch Temperaturklasse D genannt), denen die umwickelten Kabel ohne Versprödung über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

c. Chemikalienverträglichkeit beziehungsweise Verträglichkeit mit Medien im Motorraum

d. Unebene, ungleichmäßige Untergründe durch die Kabelstränge, Wellrohre und Abzweigungen. Dazu kommen noch Biege- und Zugbeanspruchung bei der Herstellung, dem Einbau und der späteren Nutzung im Motorraum eines Automobils oder auch in der Karosserie mit ständiger Biegebeanspruchung beim Öffnen von Türen.

Da das Ende des Klebebandes im Idealfall auf der eigenen Rückseite verklebt wird, muss eine gute Sofortklebkraft (Tack) auf diesem Untergrund vorhanden sein, damit nicht zu Beginn ein Abflaggen des Klebebandes auftritt. Um dauerhaft ein Flagging freies Produkt zu gewährleisten, müssen die Verankerung auf dem Untergrund und die innere Festigkeit der Klebemasse soweit ausgeprägt sein, dass die Klebeverbindung auch unter dem Einfluss von Spannung (Zug- und Biegebeanspruchung) Bestand hat.

Der Nachweis der Flaggingbeständigkeit von WH-Kabelwickelbändern wird über die TFT-Methode (Threshold Flagging Time) geführt.

Die Realisierung von leicht abrollbaren WH-Klebebändern unter gleichzeitiger Beibehaltung guter klebtechnischer Eigenschaften stellt eine große Herausforderung dar, weil beide Eigenschaften sich auszuschließen scheinen. Denn die wesentlichen Kriterien bei einseitig klebenden Kabelwickelbändern mit angepasster Abrollkraft und ausreichend hoher Klebkraft stehen dabei in krassem Gegensatz zueinander. Während für gute Klebkraftwerte und ein damit verbundenes geringes Flaggingpotential ein gutes Auffließ- und Verankerungsverhalten der Haftklebemasse vorausgesetzt wird, sind diese Kriterien für ein angenehmes Abrollverhalten eher hinderlich.

Da bei textilen Trägermaterialien eine Reduzierung der Abrollkraft durch Releasemittel technisch kaum und nur unter hohem Kostenaufwand zu realisieren ist, werden die Klebebandlagen direkt aufeinander gewickelt und die Klebmasse verklebt dabei mit der Rückseite der jeweils unteren Bandlage. Um ein Abwickeln ohne Klebmasserückstände auf der Trägerrückseite zu gewährleisten, werden höchste Ansprüche an ein ausgewogenes Verhältnis von Kohäsion und Adhäsion gestellt.

So weisen beispielsweise Kabelwickelbänder mit Haftklebemassen auf Basis von Naturkautschuk zumeist eine gute Abflaggresistenz auf, doch sie zeigen eine über die Lagerzeit sowie bei zunehmenden Temperaturen ansteigende Abrollkraft. Zudem erfüllen sie nur die unteren Temperaturklassen für die Kabelverträglichkeit. Die WO 2006/015816 A1 offenbart Haftklebemassen auf Basis von Synthesekautschuk mit Photoinitiatoren. EP 1 431 360 A2 offenbart auf sich selbst wickelbare Klebebänder mit einem thermisch verfestigten Vlies mit einem Flächengewicht von 10 bis 50 g/m$^2$ und UVvernetztem Acrylatklebstoff. Bekannt sind auch Gewebeklebebänder, die auf einer vernetzten Acrylat-Hotmeltmasse, meist auf Reinacrylat, basieren und nach LV 312 in die Temperaturklasse D (150 °C) eingestuft sind. Diese weisen eine geringe Masseverankerung auf und führen bei glatten Trägeroberflächen zu Masseumspulungen. Auch Gewebeklebebänder, die auf einer Acrylatdispersionsmasse basieren und nach LV 312 in die Temperaturklasse D (150 °C) eingestuft sind, sind bekannt. Ebenfalls sind Vliesklebebänder bekannt, die auf einer vernetzten Acrylat-Hotmeltmasse basieren, meist Reinacrylat, und die nach LV 312 in die Temperaturklasse C (125 °C) eingestuft sind. Dabei besitzen alle Gewebeprodukte die gleiche Klebemasse, welche durch Masseauftrag und UV-Vernetzung auf die jeweiligen Bedürfnisse eingestellt wird. Nachteilig sind bei ihrer Applikation auf dem Kabelsatz die merklich abstehenden Bandenden, wenn diese Klebebänder des Standardsortiments an kritischen Wicklungen wie Abzweigungen, Übergängen, kleine Durchmesser, etc., angebracht werden. Ihr Abrollkraftniveau lässt sich zwar mithilfe des gewählten Masseauftrags und vor allem UV-Vernetzung gut steuern, jedoch geht dies mit den unerwünschten Nebeneffekten deutlich abnehmender Klebkräfte und einem unkalkulierbaren Flaggingrisiko einher. Zudem können Acrylat-Hotmelt-Klebemassen nur unter erschwerten Bedingungen abgemischt werden, um Harze oder Füllstoffe einzuarbeiten. Vor dem Hintergrund einer Kostenersparnis ist der Einsatz von Füllstoffen beim Massedesign bekannt. Bekanntes Beispiel aus dem Bereich der Schichtsilikate sind hierbei Kaoline, die Zweischichtsilikate sind. Sie sind aufgrund ihrer hohen Schichtladung nicht quellfähig und liegen somit als relative grobe Füllstoffpartikel in der Klebmasse vor.

Beim Einsatz von gängigen Füllstoffen wie Kreide oder Kaolin kommt es zu deutlichen Einbußen beim Klebkraftverhalten. Zudem führt die relativ grobe Struktur der Füllstoffpartikel immer zu einer Trübung/Einfärbung der Klebmasse, was aus optischen (teilweise auch technischen) Gesichtspunkten unerwünscht sein kann.

Ebenfalls nachteilig ist, dass Arcylat-Hotmelt-Produkte (wie acResin A260 UV) zur Erzeugung abrollbarer Produkte mindestens mit 20 mJ/cm$^3$ UV-Dosis bestrahlt werden müssen, das klebtechnische Optimum jedoch bei 10 mJ/cm$^3$ UV-Dosis erhalten wird. Demgegenüber zeigen die Produkte dann aber unterhalb einer UV-Dosis von 20 mJ/cm$^3$ eine zu starke Seitenkantenklebrigkeit auf der Rolle. Daher müssen diese Rollen beim Verpacken durch Zwischenlagen voneinander getrennt werden. Ein weiterer Nachteil ist, dass es nur ein kleines Prozessfenster gibt, in dem das Flaggingverhalten und das Auffließen aufgrund der geringen Vernetzung ausreichend ist, was jedoch leicht aufgrund der geringen Vernetzung bei relativ kurzen Polymerketten bei acResin-Produkten mit geringem Molekulargewicht zu Kohäsionsbrüchen führt. Eine zusätzliche Vernetzung ist daher notwendig, um eine ausreichende Kohäsion zu gewährleisten. Bei auftretenden Spannungen wie Zug- oder Biegebelastung bricht die Klebemasse leicht und die Bandenden heben sich ab. Ebenso kann die relativ schwache Masseverankerung bei Hotmeltbeschichtung bei einer glatten Trägeroberfläche zu Masseumspulen auf die Trägerrückseite führen.

Darüber hinaus sind auch Gewebe- und Vliesklebebänder bekannt, die auf einer Lösemittel-Kautschukmasse basieren und nach LV 312 in die Temperaturklasse B (105 °C) eingestuft sind. Für die meisten Hochtemperaturanwendungen (C und D) kommen, wie vorstehend ausgeführt, Reinacrylat-Hotmeltmassen - in aller Regel aus dem Programm acResin (BASF) - zum Einsatz, welche durch Masseauftrag und UV-Vernetzung auf die jeweiligen Bedürfnisse eingestellt werden. Obwohl diese Acrylatklebemassen ausreichende Temperaturbeständigkeit aufzeigen, versagen sie häufig auf PVC-Leitungen, die im Rahmen der Spezifikationsprüfungen hinsichtlich Alterungsbeständigkeit für die Temperaturklasse B (105 °C) als Substrat dienen.

Um die klebtechnischen Eigenschaften von (Acrylat-)Klebmassen zu optimieren, werden häufig sogenannte Klebrigmacher in Form von Harzen, zum Beispiel Kolophoniumester, zugesetzt, die durch ihre eingeschränkte Temperaturstabilität zusätzlich den radikalischen Abbau sowohl des Klebebandes als auch der Kabelisolierung forcieren. In Abhängigkeit von der Affinität des Weichmachers in der Kabelisolierung zum Klebharz wird die Migration des oder der Weichmacher aus der Kabelisolierung in die Klebmasse des Klebebandes beschleunigt (siehe hierzu Prüfergebnisse Tabelle 2).

Acrylatklebemassen weisen in der Regel eine sehr hohe Affinität gegenüber den gängigen PVC-Weichmachern auf, was im Falle der sogenannten Monomer-Weichmacher wie zum Beispiel DINP, DIDP oder TOTM zu einer starken Migrationstendenz eben dieser führt. Bekannt ist zudem, dass beim Einsatz von PVC-isolierten Kabelleitungen es über die Zeit und vor allem unter Temperaturbelastung zu einer starken Weichmachermigration bis zur Einstellung eines Gleichgewichts zwischen Isolierung und Klebeband beziehungsweise Klebemasse kommt. Es findet im Ergebnis eine unerwünschte Versprödung der Kabelumhüllungen/Kabelsilosierungen statt. In Kombination mit Alterungseffekten (Oxidation, Weichmacherabgabe in die Umgebung, Abbau, mechanische Belastungen, etc.) führt eine erhöhte Weichmachermigration zu einem frühzeitigen Versagen der Kabelisolierung durch Versprödung. Dies ist auch unter dem Stichwort Sprödlücke bei Weich-PVC bekannt.

Zur Verminderung oder Vermeidung der Weichmachermigration sind in erster Linie zwei Maßnahmen bekannt: So kann a) das Gleichgewicht im Vorfeld eingestellt werden, indem der Klebmasse bereits im Herstellprozess Weichmacher zugegeben wird. Dies führt jedoch häufig zu einschneidenden Veränderungen der klebtechnischen Eigenschaften, bis hin zum völligen Kohäsionsversagen der Masse. Alternativ kann b) zur Errichtung einer wirksamen Barriere eine engmaschige Vernetzung der Klebmasse vorgenommen werden, was jedoch auch wieder dramatische Auswirkungen auf die Klebtechnik haben kann, oder es können feindisperse Füllstoffe, die in der Lage sind ein Netzwerk aufzubauen, eingesetzt werden.

Die DE 10 2008 032 570 A1 offenbart eine Haftklebemasse in Form einer Acrylatdispersion. Der Zusatz von modifizierten Schichtsilikaten zu Haftklebemassen, die auf einer Acrylatdispersion basieren, ist aus der JP 2006 316 085 A, oder der WO 2012/048128 A2 bekannt.

Der vorliegenden Erfindung liegen die Aufgaben zugrunde, eine Haftklebemasse und ein Klebeband für ein Kabelbandagierungsklebeband zur Verfügung zu stellen, bei denen die Abrollkräfte über eine größere Bandbreite einstellbar sind. Ferner sollen die Haftklebemasse und das Klebeband über eine gute Sofortklebkraft verfügen. Das Klebeband soll eine flaggingfreie Dauerverklebung ermöglichen, wobei gleichzeitig die Haftklebemasse daran gehindert werden soll, auf rauen Untergründen wie Gewebe- oder Vliesrücken von Trägern zu stark aufzufließen oder sogar in diese Substrate einzudringen. Daher ist Aufgabe der Erfindung, dass bei guter Abflaggresistenz und guter Sofortklebekraft trotzdem eine leichte Abwickelbarkeit erhalten werden soll. Zudem sollen die Klebebänder leicht auf individuelle Anforderungen eingestellt werden können wie besondere Temperaturgegebenheiten, hohe Feuchte und/oder besondere mechanische Beanspruchungen wie enge Radien oder auch ständiges Verbiegen. Das Klebeband soll ein besonders einfaches, preiswertes und schnelles Ummanteln von langgestrecktem Gut wie Kabelsätzen in Automobilen ermöglichen. Vorzugsweise wird eine gute Kabelverträglichkeit über alle genannten Temperaturklassen angestrebt. Ferner ist es eine Aufgabe, für diese Anforderungen eine Haftklebemasse zu entwickeln, die insbesondere aufgebracht wird auf Träger und die so zu Klebebändern mit den genannten Eigenschaften führt.

Eine weitere Aufgabe der vorliegenden Erfindung ist die Realisierung von hochtemperaturbeständigen Acrylatklebemassen für Anwendungen im Bereich der Kabelbandagierung (Wire Harnessing-Anwendungen (WH)), die eine ausgezeichnete Kompatibilität mit allen gängigen Kabelisolierungen aufweisen, insbesondere denen gemäß dem Referenzspektrum an Kabeln in der LV 312.

Gelöst werden diese Aufgaben durch die Verwendung eines Klebebands zum Ummanteln von langgestrecktem Gut, wie es im Hauptanspruch niedergelegt ist. Gegenstand der Unteransprüche sind dabei vorteilhafte Weiterbildungen des Erfindungsgegenstands.

Die Klebemasse ist eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die erfindungsgemäß eingesetzten Haftklebemassen basieren auf einer Grund-Haftklebemasse (ohne zugesetzte modifizierte Schichtsilikate). Im Fokus steht dabei insbesondere die Gewährleistung von dauerhaft flaggingfreien Produkten im WH-Anwendungsbereich. Daher weisen diese Haftklebemassen Massedesigns auf, die sich durch eine ausgesprochen gute Sofortklebkraft gepaart mit einer guten Verankerungsfestigkeit auf der Trägerrückseite auszeichnen. Durch die relativ langen Molekülketten (hohes Molekulargewicht) der Dispersionen der Acrylatmassen wird eine Verklebung gewährleistet, die auch unter dem Einfluss von auftretenden Spannungen (Zug- und Biegebeanspruchung) Bestand hat. Dementsprechend verhalten sich solche Haftklebemassen tendenziell etwas zäher beim Abziehen von der Rückseite, als es zum Beispiel bekannte Hotmelt-Systeme (siehe acResin) tun, die deutlich geringere Molekulargewichte aufweisen.

Als weiterer Vorteil zeigen die erfindungsgemäß eingesetzten Haftklebemassen auf den Klebebändern gute Barriereeigenschaften gegenüber einer Migration von Weichmachern aus umhüllten Kabelisolierungen, die sich wirksam unterbinden lassen können.

Um die Bandbreite der einstellbaren Abrollkräfte aufzuweiten, muss eine Gratwanderung vollzogen werden, bei der die Masse daran gehindert wird, zu stark auf raue Untergründe (zum Beispiel Gewebe- oder Vliesrücken) aufzufließen beziehungsweise sogar in diese Substrate einzudringen, und bei der die klebtechnischen Vorzüge wie Sofortklebkraft und flaggingfreie Dauerverklebung weitestgehend erhalten bleiben. Die Herstellung von Rollenware im gewünschten Abrollkraftbereich lässt sich über die Wickelspannung beim Konfektionieren/Schneiden wie beispielsweise beim Stangenwickeln, gefolgt von Abstechen oder direktes Schneiden und Wickeln beeinflussen. Als externe Einflussgröße nach der Herstellung der Rollenware lässt sich im Wesentlichen die Umgebungstemperatur ausmachen, bei der die Rollen gelagert werden.

Gelöst werden die vorgenannten Aufgaben, indem Haftklebemassen umfassend getrocknete harzabgemischte wässrige Acrylatdispersionen, durch definiertes Abmischen individuell mit modifizierten Schichtsilikaten auf die jeweiligen Anforderungen der späteren Anwendung und auf das verwendete Trägermaterial angepasst werden können. Durch die eingesetzten modifizierten Schichtsilikate, insbesondere mit polaren organischen Verbindungen oberflächenmodifizierte Dreischicht-Silikate, besonders bevorzugt organisch modifizierte synthetische Dreischicht-Silikate, bei denen die Oberflächenmodifizierung vorzugsweise mittels polarer Wechselwirkungen oder ionischen Bindungen erfolgt, werden in der Haftklebemasse durch diesen Einsatz feindisperser Füllstoffe physikalische Vernetzungsstellen geschaffen, insbesondere durch organisch modifizierte Schichtsilikate mit einer äußerst guten Quellfähigkeit in Wasser und anderen polaren Medien. Diese Schichtsilikate lassen sich durch moderate Scherkräfte exfolieren. Die auf diese Weise geschaffene dreidimensionale Vernetzung der Polymere beziehungsweise Polymerketten der Acrylatdispersion über die Anknüpfungspunkte am Füllstoff sind reversibel, wodurch die Haftklebemasse ein gutes Anhaftvermögen beibehält, jedoch nicht zu stark auf rauen Untergründen aufzieht. Die modifizierten Schichtsilikate sind vorzugsweise nicht über kovalente Bindungen oberflächenmodifiziert, sondern über intermolekulare Wechselwirkungen.

Somit wird unter der organischen Modifizierung eine Wechselwirkung von organischen Molekülen wie beispielsweise Tensiden, Schutzkolloiden mit der Oberflächenladung der Bentonite verstanden. Die Wechselwirkung findet in der Regel in Form von polaren und/oder ionischen Wechselwirkungen statt. Kovalente Bindungen werden in der Regel nicht ausgebildet. Es lassen sich damit stufenlos alle Viskositäten realisieren bis hin zum standfesten Gel.

Anders als die quellfähigen Smektite sind Kaoline, die ebenfalls zu den Schichtsilikaten zählen, nicht quellfähig, da die Schichten aufgrund der hohen Schichtladung nicht auseinandergehen. Smektite sind quellfähig und lassen sich durch moderate Scherkräfte exfolieren, das heißt, in die Einzelschichten zerlegen. Die Dreischicht-Struktur der Dreischicht-Silikate besteht aus einer zentralen Schicht von Oktaeder koordinierten Kationen, die sandwichartig von zwei Schichten aus $[(Si, Al)O_4]$-Tetraedern umgeben sind. Beispiele für Dreischicht-Silikate sind Montmorillonite. In ihrer Oktaederschicht finden zahlreiche Substitutionen statt. So können neben den überwiegend vorliegenden Aluminium-Ionen ($Al^{3+}$) in Montmorillonit, $Mg^{2+}$ in Saponit, $Fe^{3+}$ in Nontronit auch Kationen wie $Zn^{2+}$ im Sauconit, $Ni^{2+}$ in Nickel-S und Li+ in Hectrorit enthalten sein. In der Tetraederschicht kann Silizium teilweise auch durch Aluminium ($AL^{3+}$) wie beim Beidellit oder beim Montmorillonit und auch durch $Fe^{3+}$ wie beim Nontronit ersetzt sein. Die resultierenden Ungleichgewichte in der Ladungsbilanz werden in der Regel durch Natrium-, Calcium-, Kalium- oder auch Magnesium-Ionen zwischen den einzelnen Schichten ausgetauscht.

Geeignete Schichtsilikate sind natürlich vorkommende Tonmineralien aus der Smektit-Gruppe mit 3-Schicht-Struktur beispielsweise Bentonit, dessen Hauptanteil Montmorillonit ist. Der Durchmesser der einzelnen Plättchen der natürlich vorkommenden Tonmineralien beträgt hier etwa 500 bis 1000 nm, Höhe etwa 1 nm, so dass sich keine transparenten Filme der Haftklebemassen darstellen lassen. Anders sieht es bei den synthetischen Schichtsilikaten wie Hectoriten aus; diese enthaltend Lithium und weisen in der Regel Plättchendurchmesser im Bereich von 25 bis 50 nm bei einer Höhe von etwa 1 nm auf. Daher lassen sich mit synthetischen Schichtsilikaten optisch transparente Filme herstellen. Erfindungsgemäß verwendbare Dreischichtsilikate sind insbesondere kolloidal und oberflächenmodifiziert, insbesondere sind sie mit Tensiden und/oder Schutzkolloiden oberflächenmodifiziert. Laptonite sind kolloidale, synthetische Schichtsilikate (Hectorite, mit Lithium), deren Plättchen-Durchmesser zwischen 20 bis 30 nm, vorzugsweise um circa 25 nm beträgt und deren Dicke circa 1 nm beträgt. Aufgrund der geringen Größe der Plättchen ist ein sehr schneller Wiederaufbau der Kartenhausstruktur, bei der jeweils die Kanten des einen Plättchens auf der Fläche eines benachbarten Schichtsilikatplättchens anliegen, möglich. Die Dreischichtsilikate lassen sich leicht in Wasser einrühren und bilden eine klare, farblose Dispersion. Sie können ein Gel (hochviskose kolloidale Dispersion) oder ein Sol (niedrigviskose, kolloidale Dispersion) bilden.

Die Soltypen enthalten ein Dispergiermittel wie beispielsweise einen Gehalt an Tetranatriumpyrophosphat oder an Phosphonaten, insbesondere etwa größer gleich 5 insbesondere etwa größer gleich 6 Gew.-%. Das Dispergiermittel blockiert die positiv geladenen Kanten und damit die Bildung der Kartenhausstruktur. Durch Zugabe von Polymer- oder Füllstoffpartikeln kann die Blockierung aufgehoben werden, denn die Polyanionen werden bevorzugt absorbiert. Je nach Einsatzmenge der Polymer- oder Füllstoffpartikel können Sole mit geringer Viskosität eingestellt werden, insbesondere bei einem Gehalt von 10 bis 40 Gew.-%, bevorzugt um 30 Gew.-% an Polymer- oder Füllstoffpartikeln. Generell können zwei verschiedene Soltypen unterschieden werden, die temporären oder die permanenten Soltypen. Für die Verdickungswirkung ist die Freisetzung des Blockierungsmittels ganz entscheidend. Je nach Anwendung kann ein Polymer oder ein Füllstoff gewählt werden. Der Füllstoff kann dann von Vorteil sein, weil er als besserer Rezeptor mit geringerer Dosierung zugesetzt werden kann.

Gegenstand der Erfindung ist ein Klebeband zum Umwickeln von Kabeln, umfassend einen vorzugsweise textilen Träger und eine auf mindestens einer Seite des Trägers aufgebrachte Haftklebemasse umfassend (i) eine getrocknete wässrige Acrylatdispersion, bevorzugt mit einem Gelwert von größer gleich 40 %, bestimmt mittels Soxhlet-Extraktion, wobei die polymere Acrylatdispersion Polymere umfasst, die aufgebaut sind aus a) monomeren Acrylaten und optional b) ethylenisch ungesättigten Comonomeren, die keine Acrylate sind, und (ii) modifizierten Schichtsilikaten. Bevorzugt weist die Acrylatdispersion einen Gelwert größer gleich 45 % auf.

Wässrige Acrylatdispersionen, also ein in Wasser fein dispergierter Polyacrylsäureester mit Haftklebeeigenschaften, werden zum Beispiel im Handbook of Pressure Sensitive Technology von D. Satas beschrieben.

Erfindungsgemäße Haftklebemassen mit einer Gesamtzusammensetzung von 100 Gew.-% enthalten modifizierte Schichtsilikate, insbesondere modifizierte Dreischichtsilikate, bevorzugt mit Tensiden und/oder Schutzkolloiden modifizierte Schichtsilikate. Besonders bevorzugt sind gemäß einer Alternative die synthetischen Dreischichtsilikate, wobei die Haftklebemassen (bezogen auf die Masse der getrockneten polymeren Acrylatdispersion, das heißt ad 100 Gew.-%) 0,1 bis 5,0 Gew.-% Schichtsilikate, insbesondere 0,1 bis 3,5 Gew.-% Schichtsilikate enthalten (bezogen auf die Masse der Schichtsilikate oder bezogen auf den Feststoffgehalt der Schichtsilikate in Dispersionen), wobei 0,11 bis 3,2 Gew.-% bevorzugt sind, weiter bevorzugt 0,5 bis 2,8 Gew.-%, besonders bevorzugt 0,5 bis 2,0 Gew.-%.

Erfindungsgemäß eingesetzte Haftklebemassen mit der Gesamtzusammensetzung von 100 Gew.-% enthalten modifizierte Schichtsilikate, wobei eine Dispersion der Schichtsilikate zu 0,11 bis 5 Gew.-%zugesetzt wird, bezogen auf die wässrige polymere Acrylatdispersion ad 100 Gew.-%. Die Acrylatdispersion weist einen Feststoffgehalt von 50 bis 60 Gew.-% bezogen auf die wässrige Acrylatdispersion auf. Die Dispersionen der Schichtsilikate weisen einen Gehalt an Schichtsilikaten von 20 bis 50 Gew.-% auf, vorzugsweise weisen sie einen Gehalt an Schichtsilikaten von 42 bis 46 Gew.-% auf.

Die in der Haftklebemasse eingesetzten, modifizierten Schichtsilikate sind natürliche oder synthetisch hergestellte Dreischicht-Schichtsilikate. Bevorzugt sind quellbare modifizierte Schichtsilikate, insbesondere sind die modifizierten Schichtsilikate in polaren Medien wie polaren Lösemitteln und/oderWasserquellbar. Bevorzugte modifizierte Schichtsilikate sind oberflächenmodifiziert, insbesondere sind die modifizierten Schichtsilikate mit organischen Verbindungen oberflächenmodifiziert, besonders bevorzugt mit polaren organischen Verbindungen, wobei die Oberflächenmodifizierung im Wesentlichen über polare und/oder ionische Wechselwirkungen erfolgt. Die modifizierten Schichtsilikate können als Pulver, Paste oder auch als Dispersion verwendet werden.

Gegenstand der Erfindung ist weiterhin ein Klebeband sowie die Haftklebemasse umfassend modifizierte Schichtsilikate mit einer Oberfläche von 50 $m^2$/g bis 900 $m^2$/g, vorzugsweise von 100 bis 600 $m^2$/g, insbesondere um 300 $m^2$/g. Die Oberfläche der Teilchen und, ob sie als Primärpartikel, das heißt nicht agglomeriert oder aggregiert, vorliegen, kann mittels BET-Analyse (nach DIN/ISO/9277: 2003-05 bestimmt (BET-Methode)) bestimmt werden. Gleichfalls Gegenstand der Erfindung ist ein Klebeband sowie eine Haftklebemasse umfassend modifizierte Schichtsilikate mit einem Durchmesser der Schichtsilikate von 10 bis 1000 nm bei einer Höhe von etwa 1 nm, wobei nach einer Alternative a) Durchmesser von 500 bis 1000 nm, insbesondere von 500 nm bis 700 nm, und nach einer zweiten Alternative b) Durchmesser von 25 bis 50 nm bevorzugt sind, wobei jeweils die Höhe der Schichtsilikate 100 Angström bis 5 nm beträgt, bevorzugt liegt die Höhe der Schichtsilikate bei 0,5 bis 2 nm, vorzugsweise um 1 nm. Dabei können als modifizierte Schichtsilikate die folgenden einzeln oder in beliebiger Mischung ausgewählt werden: Montmorrillonit, Nontronit, Hectorit, Saponit, Sauconit, Beidellit, Allevardit, IIlit, Halloysit, Attapulgit und/oder Sepiolit ebenso wie Disteardimonium, Smektiten und/oder Bentonit.

Aufgrund der zugesetzten modifizierten Dreischicht-Silikate können die elektrischen Eigenschaften der Haftklebemasse und damit auch des Klebebandes verändert werden. So sind die erfindungsgemäßen Haftklebemassen elektrisch leitfähig und/oder antistatisch, insbesondere ist die Haftklebemasse eine elektrisch leitfähige und/oder antistatische Beschichtung, vorzugsweise auf einem Träger zur Ausbildung eines elektrisch leitfähigen Klebebandes.

Optional kann die Haftklebemasse zudem Elektronenstrahl (ESH) vernetzt sein.

Die Vorteile der erfindungsgemäßen Haftklebemassen und des erfindungsgemäßen Klebebandes umfassend die vorgenannten Acrylatdispersionen gegenüber den genannten Acrylat-Hotmeltklebmassen liegt im Wesentlichen in den deutlich höheren Molekulargewichten begründet, wodurch sich Haftklebemassen mit gutem Aufziehverhalten (kein dreidimensionales Netzwerk durch kovalente Bindungen) bei gleichzeitig ausreichender Kohäsion darstellen lassen, so dass kein zusätzlicher Vernetzungsschritt zwingend erforderlich ist.

Ein weiterer Vorteil der erfindungsgemäßen Haftklebemassen zeigt sich beim Auftragen der Dispersionen, das mit unterschiedlichsten Beschichtungsaggregaten möglich ist wie Streichmesser, Komma-Rakel, Luftrakel, Walze, Meyer Bar, Düse, etc. Ermöglicht wird dies durch die große Bandbreite an einstellbaren Viskositäten der Haftklebemasse. Die erfindungsgemäßen Haftklebemassen weisen bevorzugt eine hohe Ruheviskosität von größer gleich 200 Pa*s (bei 0,1 $s^{-1}$) auf, insbesondere größer gleich 400 Pa*s, bevorzugt größer gleich 500 bis größer gleich 1000 Pa*s (bei 0,1 $s^{-1}$). Als weiterer Vorteil kann ebenso genannt werden, dass sich eine sehr gute Verankerung der Haftklebemasse beziehungsweise der Dispersionsmassen auf den meisten Substraten einstellt, da die Masse in flüssiger Form aufgebracht wird und somit den Untergrund sehr gut benetzen kann. Die Seitenkantenklebrigkeit der Klebebänder auf Rollen ist vertretbar, auch in unvernetztem Zustand. Gleichfalls können die wässrigen Acrylatdispersionen sehr einfach abgemischt werden mit vordispergierten Harzen, Füllstoffen, Alterungsschutzmitteln, etc.

Überraschend wurde gefunden, dass sich durch die Zugabe von Schichtsilikaten zu den Haftklebemassen, insbesondere organisch modifizierter, synthetischer Schichtsilikate, bevorzugt feinstdisperser modifizierter Schichtsilikate, die Abrollkraft von Kabelwickelbändern nahezu beliebig einstellen lässt. Im Gegensatz zu gängigen Füllstoffen wie Kaolin bleibt die Sofortklebkraft bei Zugabe von feindispersen Schichtsilikaten nahezu vollständig erhalten.

Besondere Vorteile der erfindungsgemäß verwendeten modifizierten Schichtsilikate in wässrigen Acrylatdispersionen sind die äußerst einfache Abmischung der Acrylatdispersionen mit vordispergierten Schichtsilikaten. Durch die Zugabe der Schichtsilikate, insbesondere der organisch modifizierten, synthetischen Schichtsilikate lässt sich die Abrollkraft von Kabelwickelbändern nahezu beliebig einstellen, und im Gegensatz zu gängigen Füllstoffen bleibt die Sofortklebkraft bei Zugabe von feindispersen Schichtsilikaten nahezu vollständig erhalten. Darüber hinaus können die feindispersen Schichtsilikate auch zur Herstellung von elektrisch leitfähigen, antistatischen Beschichtungen eingesetzt werden. Dieses Anwendungsfeld ist insbesondere für elektrisch leitfähige Klebebandanwendungen interessant (elektromagnetische Abschirmung).

Auch bieten die erfindungsgemäßen Systeme im Gegensatz zu den vorgenannten Hotmelt-Klebmassen und im Unterschied zu anderen Acrylatdispersionen, bei denen hohe Mengen an gängigen Füllstoffen wie Kaolin zugesetzt werden, eine hohe Resistenz gegenüber Flagging.

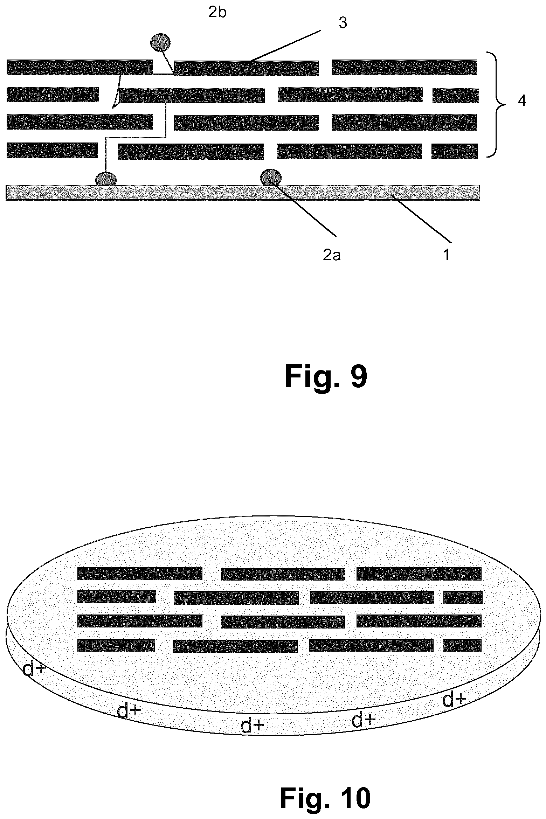

Ein Vorteil der erfindungsgemäß eingesetzten Haftklebemassen umfassend getrocknete wässrige Acrylatdispersionen, sowie der Klebebänder, die auf mindestens einer Seite des Trägers eine Haftklebemasse aufweisen, ist die Ausbildung eines Schichtsilikat-Netzwerkes, das als engmaschige Barriereschicht wirken kann (siehe Figur 9). Es wird angenommen, dass die spezifische Oberfläche von ca. 900 m$^2$/g sowie die Kristallform (siehe Figuren 9 und 10) diesen Effekt unterstützen.

Die Wirkung als Barriereschicht kann für die Diffusion von Weichmachern aus PVC-Kabelisolierungen belegt werden.

Gegenstand der Erfindung ist somit auch die Verwendung von modifizierten Schichtsilikaten zur Ausbildung einer engmaschigen Barriereschicht.

Je nach Zugabemenge der modifizierten Schichtsilikate zur Haftklebemasse kann die Weichmachermigration somit verlangsamt beziehungsweise nahezu unterbunden und das Abrutschen des Weichmachergehaltes im PVC, insbesondere in PVC-Kabelisolierungen, in den Bereich der "Sprödlücke" vermieden werden.

Zur Verlangsamung des radikalischen Abbaus wird vorzugsweise eine definierte Menge eines Alterungsschutzmittels wie ein Antioxidationsmittel zur Haftklebemasse zugesetzt. Zur Einstellung der Klebkraft werden Klebharze wie vor- oder nachstehend erläutert zur Haftklebemasse zugesetzt.

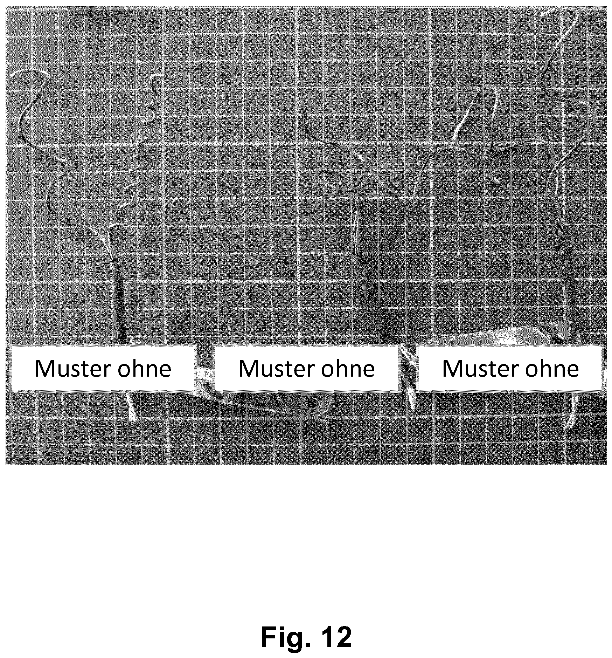

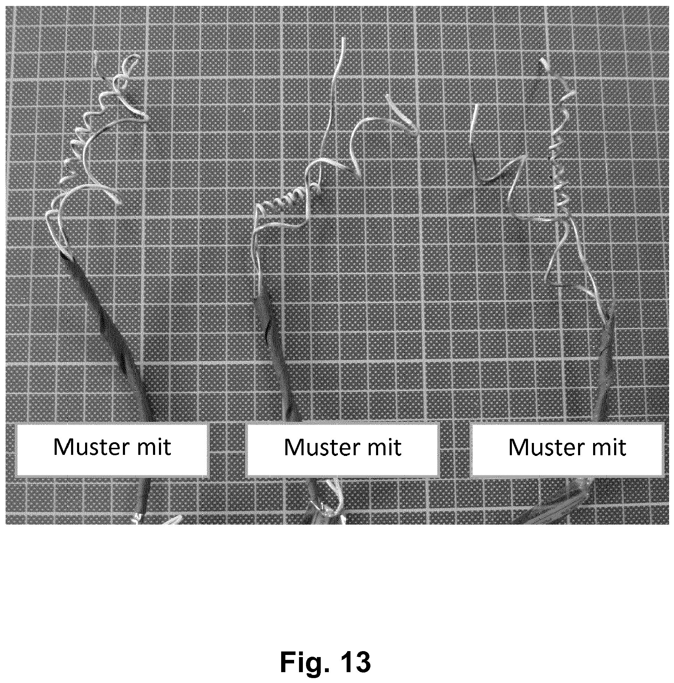

Um die Verlangsamung des Alterungsprozesses zu dokumentieren, kann die Farbe beziehungsweise die Farbstabilität der Kabelisolierung überprüft werden (Figuren 12 und 13). Unter Einsatz von modifizierten Schichtsilikaten wie Laponite SL25 als Barriereschicht bleibt die Kabeleinfärbung länger erkennbar (siehe Figur 13), was als Sicherheitsaspekt zu werten ist und zusätzlich im Falle von Reparaturen eine deutliche Arbeitserleichterung darstellt. In Figur 12 ist die Graufärbung der Kabelisolierung deutlich zu erkennen. In Figur 13 ist die ursprüngliche gelbe beziehungsweise helle Farbe der Kabelisolierung noch gut erkennbar.

Weichmacher werden Kunststoffen wie Kabelummantelungen oder -umhüllungen zugesetzt, um diese dauerhaft flexibel, geschmeidig und elastisch zu machen. Weichmacher können schwerflüchtige Harze, Ester oder Öle sein.

Die Funktion der Weichmacher ist es, den thermoplastischen Bereich zu niedrigeren Temperaturen zu verschieben. Bekannte Weichmacher umfassen beispielsweise DINP, DIDP oder TOTM. DOP (Dioctylphthalat, Di-2-ethylhexylphthalat), DINP (Diisononylphthalat), TOTM (Trioctyl-trimellitat) oder DINP (Diisodecylphthalat).

Zur Anwendung kommen häufig äußere Weichmacher, die nicht kovalent in das Polymer eingebunden werden, sondern über polare Gruppen mit dem Polymer in Wechselwirkung treten, um die Beweglichkeit der polymeren Ketten zu ermöglichen wie beispielsweise Diethylhexylphthalat (DEHP), Dioctylphthalat (DOP) als Weichmacher für PVC und Elastomere. Weitere Weichmacher umfassen Zitronensäure basierte Weichmacher wie Zitronensäuretriethylester oder Adipinsäure basierte Weichmacher wie Diethylhexyladipat und Diethyloctyladipat. Die Diffusion dieser äußeren Weichmacher aus den Kunstoffen der Kabelisolierungen kann durch die erfindungsgemäßen Klebebänder mit Haftklebemassen deutlich vermindert werden.

Unter den inneren Weichmachern werden jene verstanden, die während der Copolymerisation zugegen sind und einpolymerisiert werden, und anschließend nicht aus dem Polymer ausdiffundieren können.

Zur einfacheren Dosierung ist es vorteilhaft, die organisch modifizierten, insbesondere nanodispersen Schichtsilikate als fertige Dispersion den Haftklebemassen oder den Acrylatdispersionen zuzusetzen. Dazu können die Dispersionen ohne Einwirkung von hohen Scherkräften in die Haftklebe- oder Klebmassedispersion eingerührt werden. Alternativ können die organisch modifizierten Schichtsilikate als Feststoffe zugesetzt werden. In der Haftklebemasse liegen die organisch modifizierten Schichtsilikate in der fertig getrockneten Haftklebemasse als exfolierte, plättchenförmige Kristalle vor.

Es wurde festgestellt, dass durch die Verwendung von Laponite SL25 als Barriereschicht in der Haftklebemasse die Kabeleinfärbung länger erkennbar bleibt. Dies wird als Sicherheitsaspekt gewertet, da die Versprödung und Alterung der Kabel vermindert wird. Zudem ist dies bei Reparaturarbeiten eine deutliche Arbeitserleichterung, da die Kabel weniger häufig ausgetauscht werden müssen und flexibler bleiben.

Weitere Vorteile der modifizierten Schichtsilikate sind, dass Laponite SL25 zugleich als Verdicker für die wässrigen Dispersionen dient und somit zusätzlich als Prozesshilfsmittel fungiert. Daher können die so hergestellten Dispersionen mit unterschiedlichsten Beschichtungsaggregaten auf Trägermaterialien aufgetragen werden, denn die Bandbreite an einstellbaren Viskositäten ist groß und die Einstellung leicht über die Dosierung der modifizierten Schichtsilikate zu bewerkstelligen. Als Beschichtungsaggregate können Streichmesser, Komma-Rakel, Luftrakel, Walze, Meyer Bar, Düse, etc. dienen. Wie bereits ausgeführt, die Abmischung von Acrylatdispersionen mit vordispergierten Schichtsilikaten ist sehr einfach durch Einrühren möglich.

Überraschend können die feindispersen Schichtsilikate auch zur Herstellung von elektrisch leitfähigen, antistatischen Beschichtungen eingesetzt werden. Dieses Anwendungsfeld ist insbesondere für elektrisch leitfähige Klebebandanwendungen interessant wie bei der elektromagnetischen Abschirmung. Diese Eigenschaft lässt sich auf die große physikalische Oberfläche der synthetischen Schichtsilikate zurückführen, sie können Oberflächen von bis zu 1000 $m^2/g$ aufweisen.

Aufgrund ihrer Kristallform können diese Schichtsilikate auch eine Barrierefunktion wahrnehmen. Gegenstand der Erfindung ist damit auch ein Klebeband und eine Haftklebemasse umfassend modifizierte synthetische Schichtsilikate mit einer Barrierefunktion gegenüber Weichmachern aus Kabelisolierungen sowie eine entsprechende Verwendung.

Die erfindungsgemäß in der Haftklebemasse eingesetzte Acrylatdispersion enthält Polymere, die aufgebaut sind aus monomeren Acrylaten und optional ethylenisch ungesättigten Comonomeren, die keine Acrylate sind, wobei die getrocknete und nicht ESH vernetzte Acrylatdispersion bevorzugt einen Gelwert von größer gleich 40 % aufweist. Als monomere Acrylate werden vorliegend jene Acrylate verstanden, in denen das Acrylat über eine Carbonyl-Gruppe (C=O) verfügt wie vorzugsweise alle monomeren Acrylate mit einer gegebenenfalls funktionalisierten Stammstruktur C=C-(C=O)-, so dass Acrylamide zu den Acrylaten gerechnet werden und Acrylnitrile zu den ethylenisch ungesättigten Comonomeren.

Schichtsilikate oder auch Blatt- oder Phyllosilicate sind als Ionenaustauscher bekannt. Bekannte Schichtsilikate sind Tonmineralien wie Montmorrillonit, Nontronit, Hectorit, Saponit, Sauconit, Beidellit, Allevardit, Illit, Halloysit, Attapulgit und/oder Sepiolit ebenso wie Disteardimonium Hectorit. Hectorite sind $M_{0,3}^+(Mg_{2,7}Li_{0,3})[Si_4O_{10}(OH)_2]$, $M^+$ meist. = $Na^+$, zu den Smektiten gehörendes, dem Montmorillonit ähnliches, monoklines Tonmineral. Erfindungsgemäß bevorzugt werden modifizierte Dreischicht-Schichtsilikate oder hier synonym benutzt modifizierte Dreischicht-Tonmineralien wie zum Beispiel Illite, Smectite oder Vermiculite. Besonders bevorzugt werden die folgenden modifizierten Schichtsilikate Montmorillonit, Hectorit oder Smektit in den erfindungsgemäßen Haftklebemassen eingesetzt.

Die nicht modifizierten Schichtsilikate können laut Hersteller zur Entfaltung ihrer vollen Wirksamkeit mit polaren Zusätzen und hohen Scherkräften aktiviert werden (zum Beispiel Produktinformationen zu Tixogel ® VP-V (Quaternium-90 Bentonite) der Firma Rockwood Additives Ltd. oder zu Bentone® 38 (organisches Derivat eines Magnesium-Schichtsilikates (Hectorit)) der Firma Rheox Inc.

Diese Aktivierung der Schichtsilikate, das heißt die Überführung in eine quellbare Form, erfolgt, indem man die Schichtsilikate mit einer polaren Flüssigkeit und hohen Scherkräften behandelt. Die so erhaltenen Schichtsilikate gelten als modifizierte Schichtsilikate. Gleichfalls können modifizierte Schichtsilikate auch unter der Bezeichnung Laponite®, Optigel®, Laponite SL 25®, Laptonite S482®, Laptonite EP®, Laptonite RDS®, Optigel CK® der Firma Rockwood verwendet werden. Bevorzugt sind die natürlichen und synthetischen organisch oberflächenmodifizierten Dreischicht-Schichtsilikate.

Bevorzugt umfasst die Haftklebemasse eine Acrylatdispersion, die vorzugsweise eine wässrige Acrylatdispersion, umfassend Polymere enthält, die aufgebaut sind aus

a) größer gleich 40 Gew.-% monomeren Acrylaten und
b) 0 bis 60 Gew.-% ethylenisch ungesättigten Comonomeren, wobei die monomeren Acrylate mono-, di und/oder mehrfunktionelle Acrylate umfassen und wobei die ethylenisch ungesättigten Comonomere ausgewählt sind aus Ethylen enthaltenden Monomeren, vinylfunktionellen Monomeren und ungesättigten Kohlenwasserstoffen mit 3 bis 8 C-Atomen in Bezug auf die Polymeren.

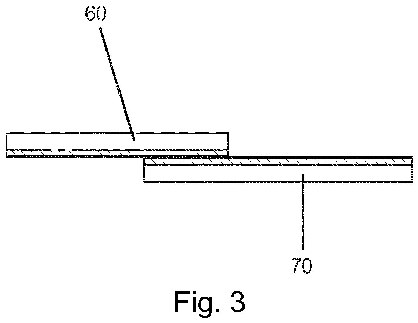

Die Acrylatdispersionen, insbesondere wässrige Acrylatdispersionen, zeichnen sich im Gegensatz zu den Acrylat-Hotmelts und lösemittelbasierten Acrylate dadurch aus, dass in ihnen zu einem gewissen Grad noch eine Separierung der Polymerknäule vorliegt, die aus den einzelnen Dispersionskugeln hervorgehen (siehe unter anderem BASF-Handbuch Lackiertechnik, Artur Goldschmidt, Hans-Joachim Streitberger, 2002, Kap. 3.1.2.1, Abb. 3.1.5, S. 337 ff.).

Bei Acrylatdispersionen kann das Molekulargewicht aufgrund des hohen Gelanteils nicht sinnvoll bestimmt werden. Der hohe Gelanteil resultiert aus den Kettenübertragungsreaktionen in den Dispersionspartikeln. Insbesondere bei der Emulsionspolymerisation ist die Wahrscheinlichkeit für eine solche Vernetzung hoch, da sich in den Dispersionspartikeln nur wachsende Polymerketten und Monomere befinden, so dass diese Vernetzung gegenüber der Lösemittelpolymerisation stark erhöht ist. Die Besonderheit der Acrylatdispersionen, insbesondere der wässrigen Acrylatdispersionen, ist, dass durch diese Art der Vernetzung im abgegrenzten Raum der Dispersionspartikel verzweigte Moleküle mit einem hohen Molekulargewicht entstehen. Der hohe Gelwert der Acrylatdispersionen beschreibt auch gut die Situation, dass sie häufig ohne weitere Vernetzung als Haftklebemassen eingesetzt werden können. Anders als Acrylat-Hotmelts oder lösemittelbasierte Acrylatklebemassen, die in aller Regel nachvernetzt werden müssen. Typische Acrylat-Hotmeltmassen weisen einen geringen Gelwert von 10 % auf.

Die in den erfindungsgemäßen Haftklebemassen verwendeten polymeren Acrylatdispersionen, insbesondere getrocknete ursprünglich wässrige Acrylatdispersionen, weisen dagegen einen Gelwert von größer gleich 40 % auf, der mittels Soxhlet-Extraktion bestimmt werden kann, insbesondere größer gleich 45 %. Typische Acrylatdispersionen, wie sie erfindungsgemäß zum Einsatz kommen können, werden in DE 10 2011 075 156 A1, DE 10 2011 075 159 A1, DE 10 2011 075 152 A1 und DE 10 2011 075 160 A1 beschrieben. Auf diese Schriften wird im Hinblick auf die erfindungsgemäß einsetzbaren Acrylatdispersionen vollständig Bezug genommen wird. Diese Acrylaltdispersionen werden darüber hinaus nachstehend näher erläutert.

Ein besonderer Vorteil der erfindungsgemäßen Haftklebemassen umfassend modifizierte Schichtsilikate und Acrylatdispersionen, optional harzabgemischte Acrylatdispersionen, liegt in der einfachen und wirtschaftlichen individuellen Abstimmbarkeit der Haftklebemasse über die Menge und Art der modifizierten Schichtsilikate als auch in der einfachen und wirtschaftlich individuellen Abstimmbarkeit der Acrylatdispersionen an die jeweiligen Anforderungen und das gewünschte Trägermaterial. Ein zweiter Vorteil liegt darin, dass optional eine gegebenenfalls gewünschte Vernetzung der harzmodifizierten Acrylatdispersionen nach der Trocknung im Beschichtungsprozess leicht von der Masseseite mittels ESH erfolgen kann, um das Optimum aus Kohäsion und Adhäsion einzustellen (siehe Figur 10).

Ein wesentlicher Vorteil, der sich in den Eigenschaften der Acrylatdispersionen zeigt, ist, dass die Acrylatdispersionen - im Gegensatz zu Hotmelt- und Lösemittel-Klebemassen - zu einem gewissen Grad eine Separierung der Polymerknäuel, die aus den einzelnen Dispersionskugeln hervorgehen, behalten.

Durch die erfindungsgemäß mögliche ESH-Bestrahlung entsteht eine weitmaschige Vernetzung innerhalb der Polymerknäule und führt zu einer Erhöhung des Molekulargewichtes in den Polymerknäulen. Vorteilhafterweise findet nahezu keine Vernetzung zwischen den Polymerknäueln statt, so dass die Masse gut fließfähig bleibt und eine gute Benetzung des Haftgrundes ermöglicht. Belegt werden kann dieses Phänomen mittels rheologischer Untersuchungen (wie DMA, Dynamisch Mechanische Analyse).

Besondere Vorteile bieten die erfindungsgemäßen Haftklebemassen umfassend (i) Acrylatdispersionen und (ii) modifizierte Schichtsilikate durch sehr einfache Abmischbarkeit mit vordispergierten Harzen, Hilfsstoffen, Füllstoffen, Alterungsschutzmitteln, etc. Es ist sogar möglich, die erfindungsgemäß einzusetzenden Haftklebemassen umfassend Acrylatdispersionen so einzustellen, dass sie auch ohne zusätzliche Vernetzung (ESH-Vernetzung) aber in Gegenwart der modifizierten Schichtsilikate eine ausreichende Kohäsion liefern und zugleich mit guten Werten für die Abrollkräfte auf fertigen Klebebandrollen zum Einsatz kommen können.

Ebenso Gegenstand der Erfindung ist ein Klebeband gemäß den vorgenannten Merkmalen, dessen TFT-Wert (Threshold Flagging Time) nach einer optionalen Elektronenstrahl-Vernetzung (ESH) vorzugsweise größer gleich 1000 Minuten beträgt, insbesondere größer gleich 1500, bevorzugt größer gleich 1700, besonders bevorzugt größer gleich 2000 Minuten, vorzugsweise größer gleich 2500 Minuten.

Ein wesentlicher Vorteil der erfindungsgemäß eingesetzten Haftklebemassen umfassend Acrylatdispersionen und modifizierte Schichtsilikate zeigt sich in den geringen geeigneten Elektronenstrahldosen von besonders bevorzugt größer gleich 5 kGy bis 10 kGy, insbesondere 10 bis 20 kGy, 20 bis 30 kGy, 30 bis 40 kGy, alternativ besonders bevorzugt von 35 bis 45 kGy oder auch größer gleich 40 bis maximal 50 kGy, zweckmäßig bis zu 80 kGy. Diese sind ausreichend, insbesondere als ESH-Dosis von Masseseite, um in Abhängigkeit vom verwendeten Trägermaterial und der jeweiligen Haftklebemasse TFT-Werte von größer 1500 Minuten, vorzugsweise von größer 2000 Minuten, bevorzugt größer gleich 2100, besonders bevorzugt größer gleich 2200, vorzugsweise TFT-Werte von größer gleich 2500 oder sogar größer gleich 3000 und größer gleich 4000 Minuten zu erzielen.

Erfindungsgemäße Klebebänder weisen auch ein Flaggingverhalten, gemessen als Länge des abstehenden Bandendes nach LV 312, von kleiner gleich 4 mm auf, vorzugsweise kleiner gleich 3 mm, besonders bevorzugt kleiner gleich 2 mm, vorzugweise kleiner gleich 1 mm bis kein Flagging, jeweils mit einer Schwankungsbreite von plus/minus 0,5 mm, vorzugsweise von plus/minus 0,2 mm.

Gegenstand der Erfindung ist auch ein Klebeband mit auf einer Seite des Trägers aufgebrachten Haftklebemasse, dessen Flächengewicht kleiner gleich 120 g/m² beträgt, insbesondere kleiner gleich 100 g/m², bevorzugt kleiner gleich 90 g/m², besonders bevorzugt kleiner gleich 80 g/m², vorzugsweise kleiner gleich 70 g/m² und in Alternativen auch gleicher gleich 60 g/m² und kleiner gleich 50 g/m², jeweils mit einer Schwankungsbreite von plus/minus 2 g/m², bevorzugt mit plus/minus 1 g/m², wobei vorzugsweise mit den nicht ESH-vernetzten Haftklebemassen bereits TFT-Werte von 1000 Minuten erzielt werden können.

Erfindungsgemäße Klebebänder zeichnen sich vorteilhaft dadurch aus, dass der TFT-Wert (Threshold Flagging Time) nach der Elektronenstrahl-Vernetzung im Vergleich zum TFT-Wert vor der Elektronenstrahl-Vernetzung (ESH) etwa um den Faktor 2 größer ist. Vorzugsweise reichen dazu bereits geringe ESH-Dosen von kleiner gleich 40 kGy, insbesondere kleiner gleich 35 kGy, besonders bevorzugt kleiner gleich 30 kGy, vorzugsweise von kleiner gleich 20 kGy, bis hin zu kleiner gleich 10 kGy aus.

Ein weiterer Gegenstand der Erfindung sind auch Klebebänder mit einer auf einer Seite des Trägers aufgebrachten Haftklebemasse umfassend modifizierte Schichtsilikate und einem Träger, der mit einer zusätzlichen Acrylatdispersion imprägniert ist, wobei diese Acrylatdispersion nicht in das Flächengewicht der Haftklebemasse eingerechnet wird. Die Imprägnierung kann mit einem Flächengewicht von kleiner gleich 30 g/m² aufgetragen werden, insbesondere kleiner gleich 25 g/m², bevorzugt kleiner gleich 20 g/m², besonders bevorzugt kleiner gleich 10 g/m², mit jeweils einer Schwankungsbreite von plus/minus 5 g/m². Die für die Imprägnierung verwendeten Acrylatdispersionen zeichnen sich dadurch aus, dass sie in getrocknetem Zustand vorzugsweise nur sehr geringe oder keine haftklebrigen Eigenschaften aufweisen. Daher können Acrylatdispersionen oder optional auch Polyurethan, kautschukbasierte oder SBR-Imprägnierungen eingesetzt werden, die in getrocknetem Zustand vorzugsweise nur sehr geringe oder keine haftklebrigen Eigenschaften aufweisen. Auf diese Weise wird ein Verblocken der Lagen auf dem Ballen verhindert. Optional können erfindungsgemäße Acrylatdispersionen mit geringen oder keinen haftklebrigen Eigenschachten, das heißt ohne Harze, eingesetzt werden.

Mit den erfindungsgemäß eingesetzten Haftklebemassen umfassend (i) getrocknete Acrylatdispersionen und (ii) modifizierte Schichtsilikate sowie einen Gehalt einen Klebrigmachers können selbst mit Trägermaterialien, deren Flächengewicht über weite Bereiche variiert werden wie von 30 bis 250 g/m$^2$, vorzugsweise von 50 bis 200 g/m$^2$, besonders bevorzugt von 60 bis 150 g/m$^2$ und/oder deren Biegesteifigkeit im Bereich von 0 bis 30 mN/60mm als Rohträger (MD, machine direction) variieren, optional von 2 bis 30 mN/60mm als Rohträger (MD) variieren, und somit auch deren Biegesteifigkeit stark unterschiedlich ist, sehr gute flaggingfreie Produkte bei guter Abrollbarkeit mit geringem Flächenauftrag an Acrylatdispersionen erhalten werden.

Ebenso ist es bevorzugt, wenn die Klebebänder eine Kombination aus Gewebeträger und Haftklebemasse darstellen, wobei der Gewebeträger ein Flächengewicht von 50 bis 250 g/m$^2$, bevorzugt von 60 bis 150 g/m$^2$ aufweist und die Haftklebemasse ein Flächengewicht von 30 bis 150 g/m$^2$, bevorzugt von 50 bis 150 g/m$^2$, wobei besonders bevorzugt der Träger ein PET-Gewebe ist.

Ebenso bevorzugt sind Klebebänder mit einer Kombination Vliesträger/Haftklebemasse, wobei der Vliesträger ein Flächengewicht von 30 bis 250 g/m$^2$, bevorzugt von 60 bis 150 g/m$^2$ aufweist und die Haftklebemasse ein Flächengewicht von 20 bis 150 g/m$^2$, bevorzugt von 50 bis 150 g/m$^2$.

Ein besonderer Vorteil der Klebebänder gemäß der Erfindung liegt darin, dass die Viskosität der Haftklebemasse durch die Elektronenstahl-Vernetzung (ESH) im Wesentlichen unverändert bleibt oder die Elektronenstrahl-Vernetzung von Polymeren im Wesentlichen innerhalb der Polymerknäule erfolgt, wobei sich das Molekulargewicht der Polymere in den Polymerknäulen im Vergleich zu den unbestrahlten Polymerknäulen erhöht, insbesondere ist die Elektronenstrahl-Vernetzung der Polymere zwischen den Polymerknäulen im Vergleich zur Elektronenstrahl-Vernetzung innerhalb der Polymerknäule geringer, vorzugsweise vernachlässigbar. Nachgewiesen werden kann dies anhand von DMA-Werten mithilfe der Viskositätsverläufe von ESH-vernetztem und unvernetztem Muster, welche über einen bestimmten Frequenzbereich von 0,1 bis 100 rad/s ausgewertet wurden. Gleichfalls kann dies anhand der Gelwerten vor und nach der ESH-Vernetzung dargestellt werden, die beide im Bereich von 40 bis 60 %, vorzugsweise zwischen 40 bis 50 % oder zwischen 44 bis 50 % liegen, wobei die Messungenauigkeit plus/minus 3 % betragen kann.

Gemäß bevorzugter Ausführungsformen umfasst das Klebeband zum Umwickeln von Kabeln einen Träger und eine auf mindestens einer Seite des Trägers aufgebrachte Haftklebemasse umfassend (i) eine getrocknete Acrylatdispersion sowie (ii) modifizierte Schichtsilikate, wobei die Acrylatdispersion, insbesondere die ungetrocknete Acrylatdispersion, Polymere umfasst, die aufgebaut oder erhältlich sind aus

(I)

a) monomeren Acrylaten ausgewählt aus 40 bis 90 Gew.-% n-Butylacrylat, 2-Ethyl-hexylacrylat und/oder Ethylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 60 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion oder

(II)

a) monomeren Acrylaten ausgewählt aus 90 bis 99 Gew.-% n-Butylacrylat und/oder 2-Ethylhexylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 1 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion oder

(III)

a) monomeren Acrylaten ausgewählt aus 30 bis 75 Gew.-%, vorzugsweise 40 bis 60 Gew.-% Alkylacrylester mit C$_4$- bis C$_{12}$-Alkylresten,
b) ethylenisch ungesättigten Comonomeren zu 5 bis 25 Gew.-%, vorzugsweise 10 bis 22 Gew.-% Ethylen, 20 bis 55 Gew.-%, vorzugsweise 28 bis 38 Gew.-% Vinylacetat und 0 bis 10 Gew.-% andere ethylenisch ungesättigte Verbindungen;

wobei die Acrylatdispersion hergestellt wird, indem die Monomere gemäß (I), (II) und/oder (III) in einer Emulsionspolymerisation umgesetzt werden, jeweils in Bezug auf die Polymeren (ausgedrückt als 100 Gew.-%) in der Acrylatdispersion. Dabei ist es besonders bevorzugt, wenn die Haftklebemasse zwischen 30 und 50 Gewichtsteile eines Klebrigmachers (bezogen auf die Masse der getrockneten polymeren Dispersion) enthält, besonders bevorzugt Kolophoniumesterharz. Ebenso Gegenstand der Erfindung sind die genannten Haftklebemassen umfassend organisch modifizierte Schichtsilikate. Dabei ist es besonders bevorzugt, wenn die modifizierten Schichtsilikate in den erfindungsgemäßen Haftklebemassen quellbar sind.

Gemäß weiterer bevorzugter Ausführungsformen umfasst das Klebeband zum Umwickeln von Kabeln, einen Träger und eine auf mindestens einer Seite des Trägers aufgebrachte Haftklebemasse umfassend (i) eine getrocknete Acrylatdispersion sowie (ii) modifizierte Schichtsilikate, wobei die Acrylatdispersion, insbesondere die ungetrocknete Acrylatdispersion, Polymere umfasst, die aufgebaut oder erhältlich sind aus a) monomeren Acrylaten, die ausgewählt sind aus Alkyl(meth)acrylaten, bevorzugt $C_1$- bis $C_{20}$-Alkyl(meth)acrylate, $C_1$- bis $C_{10}$-Hydroxyalkyl(meth)acrylate wie insbesondere Hydroxyethyl- oder Hydroxypropyl-(meth)acrylat, Säureamide wie Acrylamid oder Methacrylamid, sowie Mischungen von zwei oder mehreren der Monomere, aus b) monomeren Comonomere die ausgewählt sind aus Ethylen, aromatischen Vinylmonomeren wie Styrol, $\alpha$-Methylstyrol und Vinyltoluol, Divinylbenzol, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Itaconsäure, Maleinsäure, Fumarsäure und/oder Maleinsäureanhydrid, Acrylnitril und/oder Methacrylnitril, ungesättigten Kohlenwasserstoffen mit 3 bis 8 Kohlenstoffatomen wie Propen, Butadien, Isopren, 1-Hexen oder 1-Octen sowie Mischungen von zwei oder mehr Comonomeren.

Gemäß weiterer bevorzugter Ausführungsformen umfasst das Klebeband zum Umwickeln von Kabeln, umfassend einen Träger und eine auf mindestens einer Seite des Trägers aufgebrachte Haftklebemasse umfassend (i) eine getrocknete Acrylatdispersion und (ii) modifizierte Schichtsilikate, wobei die Acrylatdispersion Polymere umfasst, die aufgebaut oder erhältlich sind aus a) monomeren Acrylaten, die ausgewählt sind aus Acrylsäure oder Methacrylsäure, n-Butylacrylat, Ethylacrylat wie 2-Ethylhexylacrylat sowie Mischungen von zwei oder mehr Monomeren und di- oder mehrfunktionelle Monomere ausgewählt sind aus Alkyldiacrylaten wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, und Triacrylaten wie Trimethylolpropantriacrylat, und Tetraacrylate wie Pentaerythritoltetraacrylat sowie optional in Kombination mit den unter b) genannten monomeren Comonomeren.

Demgemäß betrifft die Erfindung weiterhin ein Klebeband zum Umwickeln von Kabeln, bestehend aus einem vorzugsweise textilen Träger und aus einer auf mindestens einer Seite des Trägers aufgebrachten Haftklebemasse in Form einer getrockneten Polymerdispersion, wobei das Polymer aufgebaut ist aus:

(a.1) 40 bis 90 Gew.-% n-Butylacrylat und/oder 2-Ethylhexylacrylat
(a.2) 60 bis 10 Gew.-% eines oder mehreren von (a.1) verschiedenen ethylenisch ungesättigten monofunktionellen Acrylat-Monomeren sowie
(a.3) 0 bis 1 Gew.-% eines di- oder mehrfunktionellen Acrylat-Monomers,
(b.1) 0 bis 10 Gew.-% eines ethylenisch ungesättigten Monomers mit einer Säure- oder Säureanhydridfunktion, das kein Acrylat ist, und/oder
(a.4) 0 bis 5 Gew.-% eines ethylenisch ungesättigten Acrylat-Monomers mit einer Säure- oder Säureanhydridfunktion

und die Haftklebemasse zwischen 15 und 100 Gewichtsteile eines Klebrigmachers (bezogen auf die Masse der getrockneten Polymerdispersion) enthält.

Bevorzugt ist Ethylacrylat als Monomer (a.2) oder zumindest ein Teil der Monomere (a.3). Bevorzugt ist als Monomer (a.1) 2-Ethylhexylacrylat. Gemäß einer weiteren bevorzugten Ausführungsform besteht das Monomer (a.1) aus 2-Ethylhexylacrylat und gleichzeitig das Monomer (a.2) oder zumindest ein Teil der Monomere (a.3) aus Ethylacrylat. Ganz besonders bevorzugt ist das Polymer aufgebaut aus (a.1) 40 bis 60 Gew.-% 2-Ethylhexylacrylat, (a.2) 60 bis 40 Gew.-% Ethylacrylat, (a.3) 0 bis 0,5 Gew.-% eines di- oder mehrfunktionellen Monomers, (b) 0 bis 5 Gew.-% eines ethylenisch ungesättigten Monomers mit einer Säure- oder Säureanhydridfunktion und/oder (a.4) 0 bis 5 Gew.-% eines ethylenisch ungesättigten Acrylat-Monomers mit einer Säure- oder Säureanhydridfunktion.

Als Monomer (b.1) kommen vorteilhaft in Betracht zum Beispiel Itaconsäure, Maleinsäure, Fumarsäure und/oder Maleinsäureanhydrid und/oder als Monomere (a.4) 0 bis 5 Gew.-% eines ethylenisch ungesättigten Arcylat-Monomers mit einer Säure- oder Säureanhydridfunktion wie bevorzugt Acrylsäure, Methacrylsäure. Bevorzugt sind Acrylsäure oder Methacrylsäure, gegebenenfalls die Mischung aus beiden.

Ein Beispiel für ein mehrfunktionales ethylenisch ungesättigtes Monomere (b.1) ist Divinylbenzol und für ethylenisch ungesättigte Acrylat-Monomere mit einer Säure- oder Säureanhydridfunktion (a.4) Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Unter Monomere (a.2) fallen Alkyl(meth)acrylate, bevorzugt $C_1$- bis $C_{20}$-Alkyl(meth)acrylate, $C_1$- bis $C_{10}$-Hydroxyalkyl(meth)acrylate wie insbesondere Hydroxyethyl- oder Hydroxypropyl(meth)acrylat, Säureamide wie Acrylamid oder Methacrylamid mit Ausnahme der (b) bildenden Monomere, aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, und ungesättigte Kohlenwasserstoffe mit 2 bis 8 Kohlenstoffatomen wie Ethylen, Propen, Butadien, Isopren, 1-Hexen oder 1-Octen. Erfindungsgemäß besonders bevorzugt ist Ethylacrylat.

Beispiele für mehrfunktionale ethylenisch ungesättigte Monomere (a.3) sind Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Die Polymerdispersion wird hergestellt durch das Verfahren der Emulsionspolymerisation der genannten Komponenten. Beschreibungen dieses Verfahrens werden zum Beispiel gegeben in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Erfindungsgemäße Acrylathaftklebemassen können sein typischerweise radikalisch polymerisierte Copolymere aus Acrylsäurealkylestern oder Methacrylsäurealkylestern von $C_1$- bis $C_{20}$-Alkoholen wie zum Beispiel als Monomere a) Methylacrylat, Ethyl(meth)acrylat, n-Butyl(meth)acrylat, t-Butyl(meth)acrylat, Cyclohexyl(meth)acrylat, 2-Ethylhexyl(meth)acrylat, n-Octyl(meth)acrylat, iso-Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2-Bromoethyl(meth)acrylat, Alkoxyalkyl(meth)acrylate wie Ethoxyethyl(meth)acrylat oder auch Säureamide wie Acrylamid oder Methacrylamid.

Weiterhin gehören zu den Comonomeren zur Herstellung der Acrylatdispersionen b) Ester von ethylenisch ungesättigten Di- und Tricarbonsäuren und Anhydriden wie Ethylmaleat, Dimethylfumarat und Ethylmethylitaconat sowie auch vinylaromatische Monomere wie zum Beispiel Styrol, Vinyltoluol, Methylstyrol, n-Butylstyrol, Decylstyrol. Zur Beeinflussung der physikalischen und optischen Eigenschaften der Haftklebemasse kommen mehrfunktionale ethylenisch ungesättigte Monomere b) als Vernetzermonomere in Frage beispielsweise Divinylbenzol.

Weitere mögliche Monomere (b.1) zur Erzielung der vorteilhaften Eigenschaften sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril und ungesättigte Kohlenwasserstoffe mit 2 bis 8 Kohlenstoffatomen wie Ethylen, Propen, Butadien, Isopren, 1-Hexen oder 1-Octen.

Zur Beeinflussung der physikalischen und optischen Eigenschaften der Haftklebemasse kommen mehrfunktionale ethylenisch ungesättigte Acrylat-Monomere (a.4) in a) als Vernetzermonomere in Frage. Beispiele hierzu sind Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Unter die Gruppe dieser mehrfunktionellen Monomere fallen auch UV-vernetzbare Monomere wie zum Beispiel mit (Meth)acrylatfunktionalisierte Derivate des Benzophenons oder des Benzoins.

Eine weitere Gruppe von a) Acrylat-Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder besonders in Anwesenheit von Carboxylfunktionen und/oder Aminen statt.

Zur Erzielung haftklebriger Eigenschaften muss die Verarbeitungstemperatur der Klebmasse oberhalb ihrer Glasübergangstemperatur sein damit sie viskoelastische Eigenschaften besitzt.

Typische Teilchengrößen der erfindungsgemäßen dispergierten Polymere reichen von 20 nm bis zu 10 $\mu$m. Die Polymerdispersion wird hergestellt durch das Verfahren der Emulsionspolymerisation von Acrylat- und eventuell weiteren ethylenisch ungesättigten Monomeren.

Die Scherviskositäten von kommerziellen Dispersionen sind in der Regel zu niedrig. Zur Erzielung der notwendigen Scherviskositäten werden im Regelfall Rheologieadditive, auch Verdicker genannt, eingesetzt.

Grundsätzlich unterscheidet man hier zwischen organischen und anorganischen Rheologieadditiven. Die organischen Verdicker spalten sich wiederum in zwei wesentliche Wirkprinzipien auf: (i) die Verdickung der wässrigen Phase, also nicht assoziierend, und (ii) Assoziatbildung zwischen Verdickermolekül und Partikeln, zum Teil unter Einbeziehung der Stabilisatoren (Emulgatoren). Vertreter der ersten (i) Stoffgruppe sind wasserlösliche Polyacrylsäuren und Polycoacrylsäuren, die im basischen Medium Polyelektrolyte mit großem hydrodynamischem Volumen bilden. Der Fachmann bezeichnet diese auch kurz als ASE (alkali swellable emulsion). Sie zeichnen sich durch hohe Ruhescherviskositäten und starke Scherverdünnung aus. Eine andere Stoffklasse sind die modifizierten Polysaccharide, insbesondere Celluloseether wie Carboxymethylcellulose, 2-Hydroxyethylcellulose, Carboxymethyl-2-hydroxyethylcellulose, Methylcellulose, 2-Hydroxyethylmethylcellulose, 2-Hydroxyethylethylcellulose, 2-Hydroxypropylcellulose, 2-Hydroxypropylmethylcellulose, 2-Hydroxybutylmethylcellulose. Zusätzlich zählen zu dieser Stoffklasse weniger verbreitete Polysaccharide wie Stärkederivate und spezielle Polyether.

Die Wirkgruppe der (ii) Assoziativverdicker sind im Prinzip Blockcopolymere mit einem wasserlöslichen Mittelblock und hydrophoben Endblöcken, wobei die Endblöcke mit den Partikeln oder sich selbst wechselwirken und dadurch ein Raumnetz unter Einbeziehung der Partikel bilden. Typische Vertreter sind dem Fachmann als HASE (hydrophobically modified alkali swellable emulsion), HEUR (hydrophobically modified ethyleneoxide urethane) oder HMHEC (hydrophobically modified hydroxyethyl cellulose) geläufig. Bei den HASE-Verdickern ist der Mittelblock ein ASE, die Endblöcke sind zumeist über Polyethylenoxidbrücken angekoppelte lange, hydrophobe Alkylketten. Bei den HEUR ist der wasserlösliche Mittelblock ein Polyurethan, beim HMHEC eine 2-Hydroxyethylcellulose. Besonders die nicht-ionischen HEUR und HMHEC sind weitgehend pH unempfindlich.

Je nach Struktur bewirken die Assoziativverdicker mehr oder weniger ein newtonsches (scherratenunabhängiges) oder pseudoplastisches (scherverflüssigendes) Fließverhalten. Mitunter zeigen sie auch einen thixotropen Charakter, das heißt, sie zeigen neben einer Scherkraftabhängigkeit der Viskosität auch eine Zeitabhängigkeit.

Die anorganischen Verdicker sind zumeist Schichtsilikate natürlichen oder synthetischen Ursprungs, Beispiele sind Hektorite und Smektite. Im Kontakt mit Wasser lösen sich die einzelnen Schichten voneinander. Durch unterschiedliche Ladungen an Flächen und Rändern der Plättchen bilden sie in Ruhe eine raumerfüllende Kartenhausstruktur aus, woraus hohe Ruhescherviskositäten bis hin zu Fließgrenzen resultieren. Bei Scherung bricht die Kartenhausstruktur zusammen und es ist ein deutlicher Abfall der Scherviskosität zu beobachten. Je nach Ladung, Konzentration und geometrischen Dimensionen der Plättchen kann der Strukturaufbau einige Zeit in Anspruch nehmen, so dass mit solchen anorganischen Verdickern auch Thixotropie erzielt werden kann.

Die Verdicker lassen sich teilweise direkt in die Klebstoffdispersion einrühren oder werden teilweise zuvor vorteilhaft in Wasser vorverdünnt beziehungsweise vordispergiert. Typische Einsatzkonzentrationen sind 0,1 bis 5 Gew.-% bezogen auf die Feststoffe. Anbieter von Verdickern sind zum Beispiel OMG Borchers, Omya, Byk Chemie, Dow Chemical Company, Evonik, Rockwood oder Münzing Chemie.

Ganz besonders bevorzugt ist das Polymer aufgebaut aus

(a.1) 40 bis 60 Gew.-% 2-Ethylhexylacrylat
(b.1) 0 bis 5 Gew.-% eines ethylenisch ungesättigten Monomers, insbesondere (b.1) 0 bis 5 Gew.-% eines ethylenisch ungesättigten Monomers mit einer Säure- oder Säureanhydridfunktion oder statt (b.1) als
(a.4) 0 bis 5 Gew.-% eines ethylenisch ungesättigten Acrylat-Monomers mit einer Säure- oder Säureanhydridfunktion
(a.2) 60 bis 40 Gew.-% Ethylacrylat oder statt (a.2) ein
(b.2) ethylenisch ungesättigtes Monomer, das kein Acrylat ist,
(a.3) 0 bis 0,5 Gew.-% eines di- oder mehrfunktionellen Monomers

Als Monomer (b.2) aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 2 bis 8 Kohlenstoffatomen wie Ethylen, Propen, Butadien, Isopren, 1-Hexen oder 1-Octen.

Zur Erzielung haftklebriger Eigenschaften muss sich die Klebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15 °C bis 25 °C) erfolgt, liegt die Glasübergangstemperatur der Haftklebemasseformulierung (Polymer-Klebrigmachermischung) bevorzugt unterhalb von +15 °C (ermittelt mit DSC (Differential Scanning Calorimetry) gemäß DIN 53 765 bei einer Aufheizrate von 10 K/min).

Eine weitere besonders bevorzugte Ausführungsform der Erfindung umfasst also eine Mischung aus 2-Ethylhexylacrylat als Monomer (a.1) sowie Ethylacrylat als Monomer (a.2) und Terpenphenolen und/oder Kolophoniumestern mit einem Erweichungspunkt oberhalb von 90 °C gemäß ASTM E28-99 (2009).

Besonders bevorzugte Zusammensetzungen umfassen beispielsweise:

Polymer 1   50 Gew.-% 2-Ethylhexylacrylat
2 Gew.-% Acrylsäure
48 Gew.-% Ethylacrylat

(fortgesetzt)

| | |
|---|---|
| Polymer 2 | 81 Gew.-% 2-Ethylhexylacrylat |
| | 1 Gew.-% Acrylsäure |
| | 18 Gew.-% Methylacrylat |
| | |
| Polymer 3 | 84 Gew.-% Butylacrylat |
| | 1 Gew.-% Acrylsäure |
| | 8 Gew.-% Methylacrylat |
| | 7 Gew.-% Vinylacrylat |

Aus Polymer 1 wurden die aufgeführten Haftklebemassen durch Abmischen mit Klebharzdispersionen formuliert. Dabei gibt die Zahl die Gewichtsteile an Klebrigmacher bezogen auf 100 Gewichtsteile Polymer 1 an (jeweils bezogen auf Feststoffe).
Beispielhafte Masseformulierungen aus Polymer 1 werden hergestellt:

- B1 mit 45 Teilen Kolophoniumesterharz Snowtack 100G, Lawter
- B2 mit 40 Teilen Kolophoniumesterharz Snowtack 780 G, Lawter
- B3 mit 35 Teilen Terpenphenolharz Dermulsene TR 602, DRT
- B4 aus Polymer 2, abgemischt mit 40 Gewichtsteilen des Kolophoniumesterharzes Snowtack 100G mit einem Erweichungspunkt von 99 °C und
- B5 aus Polymer 3, abgemischt mit 40 Gewichtsteilen des Kolophoniumesterharzes Snowtack 100G mit einem Erweichungspunkt von 99 °C

Gemäß einer weiteren Ausführungsform umfasst die polymere Acrylatdispersion Polymere aus:

(a.1) 90 bis 99 Gew.-% n-Butylacrylat und/oder 2-Ethylhexylacrylat,
(b.1) 0 bis 10 Gew.-% eines ethylenisch ungesättigten Monomers, insbesondere 0 bis 10 Gew.-% eines ethylenisch ungesättigten Monomers mit einer Säure- oder Säureanhydridfunktion, oder statt (b.1) als
(a.4) 0 bis 5 Gew.-% eines ethylenisch ungesättigten Acrylat-Monomers mit einer Säure- oder Säureanhydridfunktion
(a.2) 10 bis 1 Gew.-% eines oder mehreren von (a.1) verschiedenen ethylenisch ungesättigten monofunktionellen Acrylat-Monomeren oder statt (a.2) ein
(b.2) ethylenisch ungesättigtes Monomer, das kein Acrylat ist,
(a.3) 0 bis 1 Gew.-% eines di- oder mehrfunktionellen Acrylat-Monomers

und die Haftklebemasse zwischen 15 und 100 Gewichtsteile eines Klebrigmachers (bezogen auf die Masse der getrockneten Polymerdispersion).
Bevorzugt bilden 10 bis 1 Gew.-% Acrylnitril und/oder Methacrylnitril das Monomer (b.2) oder zumindest einen Teil der Monomere (b.2), besonders bevorzugt Acrylnitril. Bevorzugt bildet 2-Ethylhexylacrylat Monomer (a.1).
Gemäß einer weiteren bevorzugten Ausführungsform besteht das Monomer (a.1) aus 2-Ethylhexylacrylat und gleichzeitig das Monomer (b.2) oder zumindest ein Teil der Monomere (b.2) aus Acrylnitril und/oder Methacrylnitril, vorzugsweise aus Acrylnitril. Eine besonders bevorzugte Ausführungsform der Erfindung umfasst also eine Mischung aus 2-Ethylhexylacrylat als Monomer (a.1) und Acrylnitril als Monomer (b.2).
Als Monomer (a.4) kommen vorteilhaft in Betracht zum Beispiel Acrylsäure, Methacrylsäure. Bevorzugt sind Acrylsäure oder Methacrylsäure, gegebenenfalls die Mischung aus beiden. Alternativ kommt als Monomer (b.1) kommen vorteilhaft in Betracht zum Beispiel Itaconsäure, Maleinsäure, Fumarsäure und/oder Maleinsäureanhydrid.
Unter Monomere (a.2) fallen Alkyl(meth)acrylate, bevorzugt $C_1$- bis $C_{20}$-Alkyl(meth)acrylate mit Ausnahme der (a.1) bildenden Monomere, $C_1$- bis $C_{10}$-Hydroxyalkyl(meth)acrylate wie insbesondere Hydroxyethyl- oder Hydroxypropyl(meth)acrylat, Säureamide wie Acrylamid oder Methacrylamid. Erfindungsgemäß besonders bevorzugt ist Acrylnitril.
Unter Monomere (b.2) fallen zudem aromatische Vinylmonomere wie Styrol, $\alpha$-Methylstyrol und Vinyltoluol, Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 2 bis 8 Kohlenstoffatomen wie Ethylen, Propen, Butadien, Isopren, 1-Hexen oder 1-Octen, Acrylnitril und Methacrylnitril.
Beispiele für mehrfunktionale ethylenisch ungesättigte Monomere (a.3) sind, Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat. Alternativ als (b) 0 bis 1 Gew.-% Divinylbenzol.

Beispielhafte Zusammensetzungen der Polymerdispersionen sind:

|  | |
|---|---|
| Polymer 1 | 93 Gew.-% 2-Ethylhexylacrylat |
| | 4 Gew.-% Acrylsäure |
| | 3 Gew.-% Acrylnitril |
| | |
| Polymer 2 | 92 Gew.-% 2-Ethylhexylacrylat |
| | 2 Gew.-% Acrylsäure |
| | 6 Gew.-% Methylmethacrylat |
| | |
| Polymer 3 | 95 Gew.-% Butylacrylat |
| | 1 Gew.-% Acrylsäure |
| | 4 Gew.-% Vinylacetat |

Aus Polymer 1 wurden die in Tabelle 1 aufgeführten Haftklebemassen durch Abmischen mit Klebharzdispersionen formuliert.

- B1 mit 45 Teilen, Kolophoniumesterharz Snowtack 100G, Lawter

- B2 mit 40 Teilen Kolophoniumesterharz Snowtack 780 G, Lawter

- B3 mit 35 Teilen Terpenphenolharz.

- B4 aus Polymer 2, abgemischt mit 40 Gewichtsteilen des Kolophoniumesterharzes Snowtack 100G mit einem Erweichungspunkt von 99 °C und

- B5 aus Polymer 3, abgemischt mit 40 Gewichtsteilen des Kolophoniumesterharzes Snowtack 100G mit einem Erweichungspunkt von 99 °C

Entsprechend einer weiteren Ausführungsform umfassen die Acrylatdispersionen Polymere aus:

(b.1) 5 bis 25 Gew.-%, vorzugsweise 10 bis 22 Gew.-% Ethylen
(a.1) 30 bis 75 Gew.-%, vorzugsweise 40 bis 60 Gew.-% Alkylacrylester mit $C_4$- bis $C_{12}$-Alkylresten
(b.3) 20 bis 55 Gew.-%, vorzugsweise 28 bis 38 Gew.-% Vinylacetat
(a.2) 0 bis 10 Gew.-% andere ethylenisch ungesättigte Verbindungen oder statt (a.2) ein
(b.2) ethylenisch ungesättigtes Monomer, das kein Acrylat ist,

und die Haftklebemasse zwischen 15 und 100 Gewichtsteile eines Klebrigmachers (bezogen auf die Masse der getrockneten Polymerdispersion).

Bevorzugt handelt es sich bei dem Monomer (a.1) um n-Butylacrylat und/oder 2-Ethylhexylacrylat.

Unter Monomere (a.2) fallen Alkyl(meth)acrylate, bevorzugt $C_1$- bis $C_{20}$-Alkyl(meth)acrylate, $C_1$- bis $C_{10}$-Hydroxyalkyl(meth)acrylate wie insbesondere Hydroxyethyl- oder Hydroxypropyl(meth)acrylat, Säureamide wie Acrylamid und/oder Methacrylamid.

Unter Monomere (b.2) fallen (b) bildenden Monomere wie aromatische Vinylmonomere wie Divinylbenzol, Styrol, $\alpha$-Methylstyrol und Vinyltoluol, Vinylester aus bis zu 20 Kohlenstoffatomen enthaltenden Carbonsäuren wie Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid und ungesättigte Kohlenwasserstoffe mit 3 bis 8 Kohlenstoffatomen wie Propen, Butadien, Isopren, 1-Hexen oder 1-Octen oder deren Mischungen. Divinylbenzol kann zu 0 bis 1 Gew.-% zugesetzt werden.

Darüber hinaus können dem Polymer als Monomer (a.3) vorteilhafterweise ein di- oder mehrfunktionelles Monomer zugesetzt sein, und zwar vorzugsweise zu 0 bis 2 Gew.-% und besonders vorzugsweise zu 0 bis 1 Gew.-%. Beispiele für mehrfunktionale ethylenisch ungesättigte Acrylat-Monomere Alkyldiacrylate wie 1,2-Ethylenglykoldiacrylat, 1,4-Butandioldiacrylat, 1,6-Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Die Polymerdispersion wird hergestellt durch das Verfahren der Emulsionspolymerisation der genannten Komponenten.

Zusammensetzung weiterer Beispielpolymerdispersion: Die Beispielpolymerdispersion wurde gemäß Beispiel 1 der EP 0 017 986 B1 hergestellt und enthielt dementsprechend

Polymer 1   46,7 Gew.-% 2-Ethylhexylacrylat
31,1 Gew.-% Vinylacetat
18 Gew.-% Ethylen
2,6 Gew.-% Acrylamid
1,6 Gew.-% Acrylsäure

Aus dieser Polymerdispersion wurden Haftklebemassen formuliert:

- B1 mit 45 Teilen Kolophoniumesterharz Snowtack 100G, Lawter
- B2 mit 40 Teilen Kolophoniumesterharz Snowtack 780 G, Lawter
- B3 mit 35 Teilen Terpenphenolharz Dermulsene TR 602, DRT

Zur Erzielung haftklebriger Eigenschaften muss sich die Haftklebmasse bei der Verarbeitungstemperatur oberhalb ihrer Glastemperatur befinden, um viskoelastische Eigenschaften zu haben. Da die Kabelsatzwicklung bei normaler Umgebungstemperatur (ungefähr zwischen 15 °C bis 25 °C) erfolgt, liegt die Glasübergangstemperatur der Haftklebemasse (Acrylatdispersion mit Klebrigmachermischung) bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen (vergleiche T.G. Fox, Bull. Am. Phys. Soc. 1 (1956) 123). Durch die Klebrigmacher erhöht sich die Glasübergangstemperatur zwangsläufig, je nach Zugabemenge, Verträglichkeit und Erweichungstemperatur um ca. 5 bis 40 K. Es sind demnach nur Acrylatcopolymere mit einer Glasübergangstemperatur von höchstens 0 °C geeignet.

Beim Wickeln eines Kabelsatzes wird das Klebeband von gar nicht bis vollständig überlappend um das Kabel verklebt, das im Regelfall einen kleinen Radius hat, so dass das Klebeband sehr stark gekrümmt wird. Am Ende eines Wickelabschnittes wird üblicherweise das Band vorwiegend auf die eigene Rückseite gewickelt, so dass der Überlappungsgrad nahezu vollständig ist, ähnlich der üblichen Darreichungsform als Klebebandrolle, wo die Haftklebemasse ebenfalls auf der eigenen Rückseite verklebt ist. Beim Abflaggen wirken statische Kräfte wie zum Beispiel durch die Biegesteifigkeit des Trägers und die Wickelspannung, die dazu führen können, dass sich die offenen Klebebandenden in unerwünschter Weise aufstellen, ähnlich einer beginnenden selbsttätigen Abwicklung. Die Abflaggresistenz ist also die Fähigkeit der Haftklebemasse, dieser statischen Kraft zu widerstehen.

Der Einsatz von Klebrigmachern zur Steigerung der Klebkräfte von Haftklebemassen ist grundsätzlich bekannt. Daher tragen die zugesetzten Klebrigmacher auch zur verbesserten Abflaggresistenz bei. Der erfindungsgemäß eingesetzten Haftklebemasse werden 10 bis 75,9 Gew.-% Klebrigmacher hinzugefügt.

Für den Fachmann überraschend und nicht vorhersehbar führt der Einsatz von Klebharzen beim erfindungsgemäßen Klebeband nicht gleichzeitig zu einer schwierigen Abwickelbarkeit, obwohl beiden Anforderungen gemein ist, dass die Haftklebemasse Kontakt zur eigenen Rückseite hat.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder ß-Pinen, aromatische Harze wie Cumaron-Inden-Harze oder Harze auf Basis Styrol oder $\alpha$-Methylstyrol wie Kolophonium und seine Folgeprodukte wie zum Beispiel disproportioniertes, dimerisiertes oder verestertes Kolophonium wie zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen. Besonders bevorzugt werden Kolophoniumesterharze als Klebrigmacher zugesetzt.

Eine besonders bevorzugte Ausführungsform der Erfindung umfasst also eine Haftklebemasse umfassend eine Acrylatdispersion aus 2-Ethylhexylacrylat (Monomer a.1) sowie Ethylacrylat (Monomer a.2) und Terpenphenolen und/oder Kolophoniumestern mit einem Erweichungspunkt oberhalb von 90 °C gemäß ASTM E28-99 (2009).

Zur weiteren Verbesserung der Kabelverträglichkeit kann die Klebmasseformulierung optional mit Lichtschutz- oder primären und/oder sekundären Alterungsschutzmitteln abgemischt sein. Als Alterungsschutzmittel können Produkte auf Basis sterisch gehinderter Phenole, Phosphite, Thiosynergisten, sterisch gehinderter Amine oder UV-Absorber eingesetzt werden. Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168. Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthio-methyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Bevorzugt ist die Darreichungsform in Form einer Dispersion zur besonders einfachen Mischbarkeit mit der Klebmassedispersion. Alternativ können flüssige Alterungsschutzmittel auch direkt in die Dispersion eingearbeitet werden, wobei sich an den Einarbeitungsschritt noch eine Standzeit über einige Stunden anschließen sollte, um die homogene Verteilung in der Dispersion oder die Aufnahme des Alterungsschutzmittels in die Dispersionspartikel zu ermöglichen. Eine weitere Alternative ist die Zugabe einer organischen Lösung der Alterungsschutzmittel in die Dispersion. Geeignete Konzentrationen liegen im Bereich von 0,1 bis zu 5 Gewichtsteilen bezogen auf die Feststoffe.

Zur Verbesserung der Verarbeitungseigenschaften können der Haftklebemasse zur Formulierung weitere übliche Prozesshilfsmitteln wie Rheologieadditiven (Verdicker), Entschäumern, Entlüftern, Netzmitteln oder Verlaufsmitteln zugemischt werden. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.

Gemäß bevorzugten Ausführungsformen weist die erfindungsgemäße Haftklebemasse nach ASTM D3330 eine Klebkraft auf Stahl von größer gleich 4,5 N/cm bei einem Flächengewicht der Haftklebemasse von 100 g/m$^2$ auf, vorzugsweise auf einem PET-Gewebe als Träger, besonders bevorzugt mit den genannten Flächengewichten des Gewebes. Besonders bevorzugt weist die Haftklebemasse eine Klebkraft von größer gleich beziehungsweise mindestens 4,5 N/cm auf (bei einem Flächengewicht der Haftklebemasse von 90 g/m$^2$ auf Polyestergewebe als Träger, vorzugsweise auch bereits bei 80 g/m$^2$, besonders bevorzugt bei 70 g/m$^2$ auf Polyestergewebe als Träger). Besonders bevorzugt weist die Haftklebemasse nach ASTM D3330 eine Klebkraft auf Stahl von mindestens 5,0 N/cm auf (bei einem Flächengewicht der Haftklebemasse von 90 g/m$^2$ auf Polyestergewebe als Träger), vorzugsweise größer gleich 5,2 N/cm, 5,3 N/cm, 5,4 N/cm, 5,5 N/cm, 5,6 N/cm oder 5,7 N/cm, besonders bevorzugt 5,7 bis 6,0 N/cm.

Gleichfalls Gegenstand der Erfindung ist ein Klebeband mit einer Haftklebemasse sowie eine Haftklebemasse, die nach LV 312 vorzugsweise eine Abrollkraft von 4,0 N/cm bei 30 m/min aufweisen, insbesondere kleiner gleich 3,9 bis 2,0, besonders bevorzugt kleiner gleich 3,8 N/cm bis 2,0 N/cm, wobei vorzugsweise zugleich eine Klebkraft auf Stahl von mindestens 4,5 N/cm nach ASTM D3330 (bei einem Flächengewicht der Haftklebemasse von 100 g/m$^2$ auf Polyestergewebe als Träger) erhalten wird. Die Abrollkraft der erfindungsgemäßen Klebebänder kann gezielt und exakt eingestellt werden. Von besonderem Interesse ist dies für manuell oder maschinell anzubringende Kabelbandagierungsklebebänder. Die Zielgröße für maschinell angebrachten Kabelbandagierungsklebebänder liegt bei kleiner 4 N/cm bei 30 m/min, für manuelle liegen die Werte bei 5 bis 7 N/cm.

Ebenso Gegenstand der Erfindung ist ein Klebeband mit einer Haftklebemasse oder eine Haftklebemasse, die nach ASTM D3330 eine Klebkraft auf der Rückseite des Trägers des Klebebandes von mindestens 3,0 N/cm aufweist (bei einem Flächengewicht der Haftklebemasse von 90 g/m$^2$ auf Polyestergewebe als Träger). Vorzugsweise wird eine Klebkraft auf der Rückseite des Trägers des Klebebandes von größer gleich 2,0, insbesondere größer gleich 3,0 N/cm, bevorzugt größer gleich 3,3 N/cm, besonders bevorzugt größer gleich 3,5, oder besonders bevorzugt größer gleich 4,0 N/cm erhalten.

Gegenstand der Erfindung ist auch ein Klebeband mit Haftklebemasse mit einem TFT-Wert (Threshold Flagging Time) von größer gleich 700 Minuten, wobei die Haftklebemasse modifizierte Schichtsilikate enthält, vorzugsweise größer gleich 800 Minuten, besonders bevorzugt größer gleich 1000 Minuten.
Der Gehalt in Gew.-% an modifizierten Schichtsilikaten liegt dabei in den genannten Bereichen, insbesondere liegt der Gehalt an modifizierten Schichtsilikaten in der Haftklebemasse zwischen 0,1 bis 5 Gew.-% in der gesamten Haftklebemasse bezogen auf die getrocknete polymere Dispersion, bevorzugt sind 0,2 bis 2,5 Gew.-%.

Erfindungsgemäß bevorzugt ist der Träger ein textiler Träger, bevorzugt ein Gewebe, insbesondere ein Polyestergewebe, ein Vlies oder Gewirk, dabei ist es weiter bevorzugt, wenn der Träger ein Flächengewicht von 30 bis 250 g/m$^2$, vorzugsweise von 50 bis 200 g/m$^2$, besonders bevorzugt von 60 bis 150 g/m$^2$ aufweist.

Als Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln wie zum Beispiel Sand, Kies oder dergleichen vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer, bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern. Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden. Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den vorgenannten Fasermaterialien, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Die Kettfäden und/oder die Schussfäden können dabei jeweils nur aus synthetischen Fäden oder aus Fäden aus natürlichen Rohstoffe bestehen.

Bevorzugt wird als Material für den Träger Polyester aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Zur Ummantelung des langgestreckten Gutes eignet sich auch ein Träger, der aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.

Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkenden Stoffen beziehungsweise zur Antihaftbeschichtung ausgerüstet sein.

Die Klebemasse kann in Längsrichtung des Klebebands in Form eines Streifens aufgebracht sein, der eine geringere Breite aufweist als der Träger des Klebebands.

Je nach Verwendungsfall können auch mehrere parallele Streifen des Klebers auf dem Trägermaterial beschichtet sein. Die Lage des Streifens auf dem Träger ist frei wählbar, wobei eine Anordnung direkt an einer der Kanten des Trägers bevorzugt wird. Bevorzugt ist die Klebemasse vollflächig auf dem Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken. Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes. Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt. Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt. Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird. Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist. Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Gegenstand der Offenbarung ist weiterhin ein Verfahren zur Herstellung eines Klebebandes sowie ein Klebeband erhältlich nach diesem Verfahren zum Umwickeln von Kabeln, aus einem textilen Träger und einer auf mindestens einer Seite des Trägers aufgebrachten Haftklebemasse, indem die Haftklebemasse

- auf mindestens einer Seite des textilen Trägers aufgebracht wird,
- optional wird die Haftklebemasse getrocknet,

wobei die Haftklebemasse (i) eine polymere Acrylatdispersion und (ii) modifizierte Schichtsilikate umfasst.

Nach bevorzugten Verfahren umfasst die Haftklebemasse modifizierte Schichtsilikate, die natürliche oder synthetisch hergestellte Dreischicht-Schichtsilikate sind. Dabei sind besonders bevorzugt quellbare modifizierten Schichtsilikate einzusetzen, insbesondere in sollen sie in polaren Medien, vorzugsweise in polaren organischen Lösemitteln, besonders bevorzugt in Wasser quellbar sein. Als polare Medien kommen vorzugsweise mit Wasser mischbare polare Lösemittel in Betracht wie protische oder aprotische Lösemittel. Dies können sein, Ketone wie Aceton, Essigester, Alkohole wie Ethanol, THF oder auch polare Monomere der Acrylate.

Gegenstand der Offenbarung ist ebenfalls ein Verfahren zur Herstellung eines Klebebandes zum Umwickeln von Kabeln aus einem textilen Träger und einer auf mindestens einer Seite des Trägers aufgebrachten Haftklebemasse, sowie ein Klebeband erhältlich nach diesem Verfahren, indem die Haftklebemasse

- auf mindestens einer Seite des textilen Trägers aufgebracht wird,
- optional wird die Haftklebemasse getrocknet,
- die Haftklebemasse wird mit Elektronenstrahlen vernetzt, wobei
  vorzugsweise der Träger auf der Elektronenstrahlenquelle abgewandten Seite der Haftklebemasse angeordnet ist.

Insbesondere erfolgt die Elektronenstrahl-Vernetzung (ESH) mit 0,001 bis 80 kGy, vorzugsweise mit 5 bis 80 kGy, besonders bevorzugt mit 10 bis 50 kGy. Je nach Haftklebemasse erfolgt die Vernetzung mit 5 bis 20 kGy oder alternativ mit 20 bis 50 kGy, weiter bevorzugt wird die dem Trägermaterial abgewandte Seite der Haftklebemasse mit Elektronenstrahlen (ESH) bestrahlt, insbesondere beträgt die Dosis 5 bis 50 kGy, insbesondere 5 bis 45 kGy, je nach Haftklebemasse 5 bis 20 kGy oder alternativ 20 bis 50 kGy, wobei die Haftklebemasse (i) eine polymere Acrylatdispersion und (ii) modifizierte Schichtsilikate umfasst, weiter enthält die Haftklebemasse zwischen 15 und 100 Gewichtsteile eines Klebrigmachers (bezogen auf die Masse der getrockneten polymeren Dispersion).

Der Herstellprozess des Klebebandes umfasst die Beschichtung des Trägers direkt mit der Haftklebemasse in einem oder mehreren nacheinander durchgeführten Arbeitsgängen. Im Falle von textilen Trägern kann das unbehandelte Textil direkt oder im Transferverfahren beschichtet werden. Alternativ kann das Textil mit einer Beschichtung beziehungsweise Imprägnierung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden. Als Auftragsaggregate werden die üblichen eingesetzt: Drahtrakel, Streichbalken, Walzenauftrag, Düsenbeschichtung, Doppelkammerrakel, Mehrfachkaskadendüse. Erfindungsgemäß kann die Haftklebemasse zusätzlich unmittelbar mit Elektronenstrahlen vernetzt werden, so dass die Haftklebemasse nicht durch die Trägerseite mittels Elektronenstrahlen vernetzt wird, sondern die Elektronenstrahlquelle direkt der nicht abgedeckten Haftklebemasse zugewandt ist.

Bevorzugte Haftklebemassen umfassen in der Gesamtzusammensetzung in Gew.-%:

(i) 24 bis 89,9 Gew.-% einer wässrigen Acrylatdispersion,
(ii) 10 bis 75,9 Gew.-% eines Klebrigmachers und
(iii) 0,1 bis 5 Gew.-% modifizierte Schichtsilikate, in Form einer Lösung oder Dispersion enthaltend modifizierte Schichtsilikate mit definiertem Feststoffgehalt an modifizierten Schichtsilikaten, in Bezug auf die Gesamtzusammensetzung der Haftklebemasse.

Besonders bevorzugt sind

(i) 50 bis 80 Gew.-%, bevorzugt 60 bis 70 Gew.-% einer wässrigen Acrylatdispersion, bevorzugt mit einem Feststoffgehalt an Acrylaten von 30 bis 80 Gew.-%, insbesondere von 40 bis 70 Gew.-%, bevorzugt von 50 bis 60 Gew.-%, besonders bevorzugt von 55 Gew.-% mit einer Schwankungsbreite von plus/minus 5 Gew.-%, insbesondere plus/minus 2,5 Gew.-%,
(ii) 20 bis 50 Gew.-%, bevorzugt 20 bis 40 Gew.-% eines Klebrigmachers und
(iii) 0,2 bis 2,5 Gew.-% modifizierter Schichtsilikate, in Form einer Lösung oder Dispersion enthaltend modifizierte Schichtsilikate mit definiertem Feststoffgehalt an modifizierten Schichtsilikaten, bevorzugt 0,7 bis 2,0 Gew.-% modifizierte Schichtsilikate,

in Bezug auf die Gesamtzusammensetzung der Haftklebemasse.
Gemäß einer besonders bevorzugten Alternative werden die modifizierten Schichtsilikate in Form einer Lösung oder Dispersion zugesetzt. Dann entspricht (iii) 0,1 bis 10 Gew.-% einer Lösung modifizierter Schichtsilikate, insbesondere einer Lösung oder Dispersion mit einem Gehalt von circa 25 Gew.-% modifizierten Schichtsilikaten, besonders bevorzugt sind 0,5 bis 7,5 Gew.-%, 1,0 bis 7,0 Gew.-%, 2,0 bis 7,0 Gew.-%, 2,0 bis 5,0 Gew.-% der Lösung oder Dispersion. Somit sind selbst geringste Mengen an Schichtsilikaten für den Aufbau einer Barriereschicht ausreichend.
Der Feststoffgehalt ist jeweils unabhängig auf die Masse der getrockneten polymeren Dispersion oder der getrockneten Lösung bezogen.
Erfindungsgemäß eingesetzte Haftklebemassen oder Klebebänder sind in der Lage, die Migration von Weichmachern aus Kabelummantelungen eines langgestreckten Gutes zu vermindern, insbesondere sind sie in der Lage die Weichmachermigration aus einem mit PVC ummantelten langestrecken Gut zur vermindern. Dadurch wird die Versprödung der Kabelisolierungen langfristig unterdrückt und verzögert.
Ein weiterer Gegenstand der Erfindung ist die Verwendung von Elektronenstrahlen zur Vernetzung von erfindungsgemäß eingesetzten Haftklebemassen auf Trägern von Klebebändern zum Umwickeln von Kabeln insbesondere zum Umwickeln von Kabeln im Automotivbereich wie Kabelsätzen in Kraftfahrzeugen, sowie generell von Kabeln, die besonderen Einflüssen wie
Hitze und/oder Feuchte ausgesetzt sind wie von Kabeln, die in Windkraftanlagen beispielsweise Offshore Windparks etc. verbaut werden. Somit ist auch ein Gegenstand der Erfindung die Verwendung von Elektronenstrahl (ESH) vernetzten Klebebändernzum Umwickeln von Kabeln, insbesondere von Kabeln die erhöhter Temperatur und/oder Feuchte ausgesetzt sind. Aufgrund der geschilderten positiven Eigenschaften lässt sich das Klebeband hervorragend zum Isolieren und Wickeln von Drähten oder Kabeln verwenden.
Gegenstand der Erfindung ist die Verwendung eines erfindungsgemäß eingesetzten Klebebandes umfassend modifizierte Schichtsilikate zum Ummanteln von langgestrecktem Gut, wobei das Klebeband in einer Schraubenlinie um das langgestreckte Gut geführt wird oder alternativ wobei das langgestreckte Gut in axialer Richtung von dem Band umhüllt wird. Zusätzlich ist Gegenstand der Erfindung ein langgestrecktes Gut, wie insbesondere ein Kabelsatz, ummantelt mit einem erfindungsgemäßen Klebeband.
Gegenstand der Erfindung ist die Verwendung der erfindungsgemäß eingesetzen Klebebänder zur Verminderung der Migration von Weichmachern aus Kabelumhüllungen wie Kabelummantelungen und Kabelisolierungen oder zur Verzögerung der Versprödung von Kabelumhüllungen, insbesondere zur Verminderung der Weichmachermigration aus PVC-ummantelten Kabeln. Die erfindungsgemäße Verwendung ermöglicht es, dass der Gehalt an Weichmachern jeweils in Gew.-% in Kabelumhüllungen nach mindestens 2000 h noch mindestens 60 % des ursprünglichen Gehaltes in der Kabelumhüllung beträgt, insbesondere gemessen unter beziehungsweise nach den Bedingungen nach LV 312. Vorzugsweise wird der Gehalt von Weichmachern in PVC-Kabelumhüllungen, insbesondere der Weichmacher umfassend TOTM, DOP (Dioctylphthalat, Di-2-ethylhexylphthalat), DINP (Diisononylphthalat), TOTM (Trioctyl-trimellitat), DINP (Diisodecylphthalat), Zitronensäuretriethylester oder Adipinsäure basierte Weichmacher wie Diethylhexyladipat und Diethyloctyladipat. Besonders bevorzugt beträgt der Gehalt an Weichmachern in Kabelumhüllungen, die mit den erfindungsgemäßen Kabelbändern umhüllt sind, nach 2000 h größer gleich 66 %, bevorzugt größer gleich 70 %, besonders bevorzugt größer gleich 80 %, wobei es weiter bevorzugt ist, wenn der Gehalt nach 2500 h oder nach 3000 h jeweils unabhängig noch mindestens einen Gehalt an 60 % des ursprünglichen Gehaltes an Weichmachern aufweist. Bevorzugt sind Gehalte größer gleich 66 %, 70 %, 75 %, 80 % oder 85 %.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich. Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart. Schließlich beschreiben die EP 1 315 781 A1 sowie die DE 103 29 994 A1 Ausführungsformen von Klebebändern, wie sie auch für das erfindungsgemäße Klebeband möglich sind.

Weiter vorzugsweise zerstört das Klebeband bei Verklebung auf Kabeln mit PVC-Ummantelung und auf Kabeln mit Polyolefin-Ummantelung die selbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden. Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen C und D über 3000 h.

Im Folgenden soll das Klebeband anhand mehrerer Figuren beispielhaft näher erläutert werden, ohne die Erfindung auf diese Ausführungsformen zu beschränken. Die in den Beispielen offenbarten technischen Merkmale können in der Zusammenschau mit den vorstehend genannten Merkmalen verallgemeinert werden.

Es zeigen:

| | |
|---|---|
| Figur 1 | das Klebeband im seitlichen Schnitt, |
| Figur 2 | einen Ausschnitt eines Kabelbaums, der sich aus einer Bündelung von einzelnen Kabeln zusammensetzt und der mit dem erfindungsgemäßen Klebeband ummantelt ist, und |
| Figur 3 | eine vorteilhafte Anwendung des Klebebands, |
| Figuren 4 bis 7 | Messung Abflaggresistenz nach LV 312 beziehungsweise nach TFT-Methode, |
| Figur 8 | Zusammenspiel von Kohäsion und Adhäsion beim Ablösen der Bandendes, |
| Figur 9 | Funktionsweise der Barriereschicht, |
| Figur 10 | einen skizzierten Aufbau eines Schichtsilikat-Kristalls, |
| Figur 11 | Schubspannungssweep 25 °C Viskosität, |
| Figur 12 | Verfärbung im Falle der Referenzleitung PVC von Gebauer & Griller, |
| Figur 13 | nicht verfärbte Muster (glänzen metallisch). |

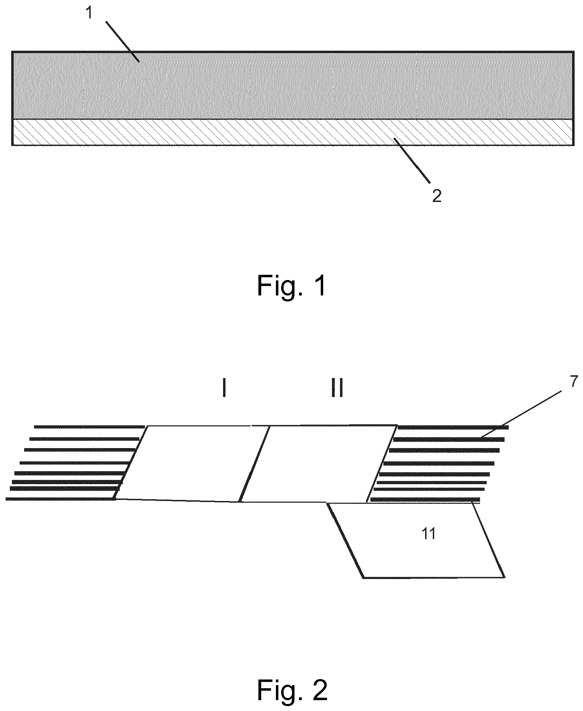

In der Figur 1 ist im Schnitt in Querrichtung (Querschnitt) das Klebeband gezeigt, das aus einem Geweberträger 1 besteht, auf den einseitig eine Schicht einer selbstklebenden Beschichtung 2 aufgebracht ist. In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt. Der gezeigte Ausschnitt des Kabelbaums zeigt zwei Wicklungen I und II des Klebebands. Nach links hin würden sich weitere Wicklungen erstrecken, diese sind hier nicht dargestellt. In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist. In Figur 9 ist schematisch eine Barriereschicht 4 dargestellt, die aus einzelnen Dreischichtsilikaten 3 aufgebaut ist und die Migration der Weichmachermoleküle 2a aus dem Substrat 1, wie einer Kabelisolierung 1, an die äußere Oberfläche des Klebebandes unterbinden, so dass nur geringe Mengen an migrierten Weichmachermolekülen 2b vorhanden sind. Figur 10 zeigt schematisch einen einzelnen Laptonite Kristall mit einem Durchmesser von circa 25 nm und 0.92 nm Dicke. An den äußeren Kanten sind Partialladungen.

**Beispiele:** *Skizze der Beispiele:* Das erfindungsgemäße Klebeband wird nachfolgend in bevorzugter Ausführung anhand mehrerer Beispiele beschrieben, ohne damit die Erfindung irgendeiner Weise zu beschränken. Des Weiteren sind Vergleichsbeispiele aufgeführt, in denen nicht erfindungsgemäße Klebebänder dargestellt sind.

Zur Erläuterung der Erfindung wurden Beispielklebebänder nach folgendem Schema hergestellt: Die Haftklebstoffdispersionen wurden aus Polymer- und Harzdispersion entsprechend den Beispielrezepturen gemischt und mit einem Rührer innig homogenisiert. Anschließend wurden die Haftklebstoffdispersionen durch Einrühren eines modifizierten Schichtsilikats auf eine Viskosität von ca. 500 Pa*s bei einer Schergeschwindigkeit von 0,1 s$^{-1}$ eingestellt. Mit einem Filmziehgerät wurde ein Polyestergewebe (gemäß den Angaben in den Beispielen) so mit der verdickten Beispielhaftklebstoffdispersion bestrichen, dass nach dem Trocknen in einem Umluftofen bei 85 °C über 5 Minuten ein Klebmasseflächengewicht von ca. 20 g/m² resultierte. Das in dieser Weise imprägnierte Gewebe wurde in einem zweiten Arbeitsschritt analog mit der gleichen Dispersion bestrichen, so dass nach dem Trocknen in einem Umluftofen bei 85 °C über 10 Minuten ein Klebmassegesamtflächengewicht von 90 g/m² beziehungsweise entsprechend den Angaben in den Beispielen resultierte.

**Beurteilungskriterien:** Die Kriterien für ein anwendungsgerechtes Klebeband für die Umwicklung von Kabeln ist vorliegend die Klebkraft auf Stahl, die Klebkraft auf der Rückseite in Kombination mit der Abrollkraft bei 30 m/min. Abrollkraft von Rollen nach Lagerung bei Raumtemperatur, circa 23 °C über 4 Wochen und 50 % Luftfeuchtigkeit.

Durchführung der Tests: Die Messungen werden - soweit nicht ausdrücklich anders erwähnt - bei einem Prüfklima von 23 ± 1 °C und 50 ± 5 % rel. Luftfeuchte durchgeführt.

Messung der Abflaggresistenz nach LV 312 beziehungsweise TFT-Methode (Threshold Flagging Time)

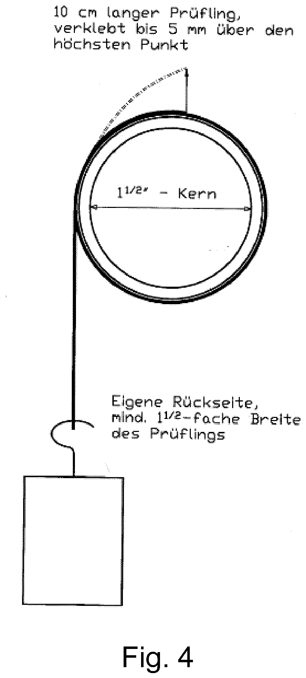

Zur Ermittlung des Flaggingverhaltens nach der TFT-Methode kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein Flagging ähnliches Ablösen des Klebebandes vom verklebten oberen Ende her und ein letztendliches Versagen durch Abfallen der Prüflinge (siehe Figur 4, in der auch der schematische Aufbau gezeigt ist). Die Zeit in Minuten bis zum Abfallen ist das Ergebnis. Die ausschlaggebenden Parameter für die Haltezeit der Prüflinge sind Gewicht und Temperatur, wobei das Gewicht so zu wählen ist, dass sich Werte von mindestens 100 min ergeben.

Der zylindrisch geformte Prüfdorn ist 1½"-Pappkern mit 42 ± 2 mm Außendurchmesser, versehen mit einer Markierungslinie 5 mm neben der Scheitellinie.

Der Haftgrund ist die eigene Rückseite des Klebebands.

Der Handroller hat ein Gewicht von 2 kg.

Das Prüfgewicht beträgt 1 kg.

Das Prüfklima ist 23 ± 1 °C bei 50 ± 5 % rel. Feuchte beziehungsweise 40 °C im Wärmeschrank.

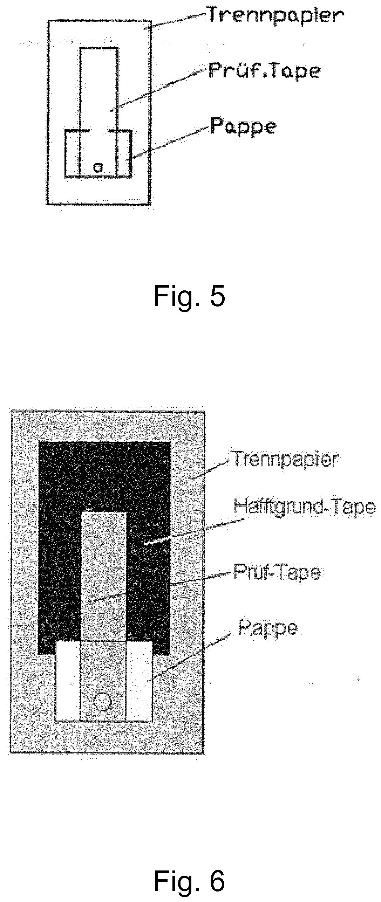

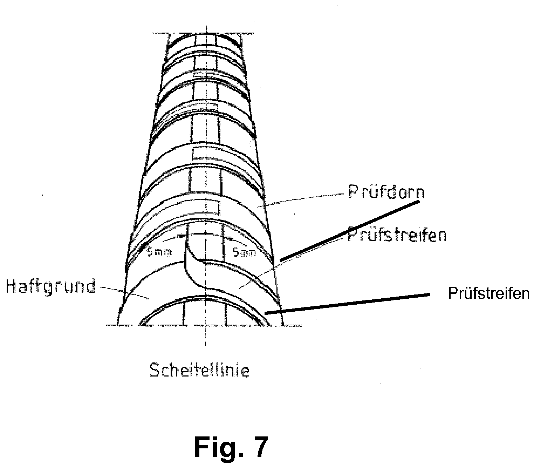

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden. Unter eines der Enden eines jeden Streifens wird ein Pappkärtchen geklebt und der Verbund gelocht (siehe Figur 5). Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 6). Die Prüflinge werden mit dem 2 kg-Handroller in 3 Zyklen mit einer Geschwindigkeit von 10 m/min überrollt. Die fertigen Prüfmuster, also die Prüfstreifen samt Haftgrund, werden nun so auf den Pappkern geklebt, dass das obere Ende des Prüflings den Scheitelpunkt um 5 mm überlappt (siehe Figur 7). Dabei darf nur der Haftgrund und nicht der Prüfling angedrückt werden. Die fertig präparierten Prüflinge werden für 20 ± 4 Stunden ohne Gewichtsbelastung in einem Klimaraum bei 40 °C belassen.

Danach werden Gewichte mit einer Masse von einem Kilogramm angehängt und die Messuhren gestartet. Die Messung endet nach Versagen aller drei Prüflinge eines Musters. Der Median der drei Einzelmessungen wird in Minuten angegeben. Die Haltezeit wird in Minuten angegeben. Dabei gilt ein TFT-Wert von größer gleich 700 Minuten, vorzugsweise größer gleich 1000 Minuten, weiter vorzugsweise größer gleich 1200 Minuten, besonders bevorzugt größer gleich 2000 Minuten als unterer Grenzwert bei der Resistenz gegen Abflaggen.

Abrollkraft

Messung der Abrollkraft nach LV 312 bei einer Abzugsgeschwindigkeit von 30 m/min.

Erweichungspunkt

Messung gemäß ASTM E28-99 (2009)

Extraktion Weichmacher

0,5 bis 1 g einer zerkleinerten Probe werden mit 20 bis 100 ml Toluol (n-Toluol) im Ultraschallbad für 60 Minuten bei 60 °C extrahiert. Der Gehalt an Weichmacher wird mittels GC-MS ermittelt. Mit dieser Methode können Weichmachergehalte von 5 mg/kg nachgewiesen werden.

Thermische Alterung

LV 312-1 (insbesondere ab Seite 10).

Rheologie

Experimentelles: Messgerät: Rheometer DSR 200 N von Rheometric Scientific,

- Messkopf: 200 g Luftgelagert mit Normalkraft,
- Messgeometrie: Platte/Kegel,
- Temperierung: Peltierelemente mit Regelung und Vorkühlung,
- Durchmesser: 25 mm (Kegel), Kegelwinkel: 0,1 rad, Spalt: 0,053 mm, Schubspannungssweep (Kegel),
- Temperatur: 25 °C,
- Anfangsschubspannung: 0,1 Pa, Endschubspannung: 4790 Pa,
- Punkte pro Dekade: 10
- Schergeschwindigkeit von 100 s$^{-1}$

Gelwert

Der Gelwert wird durch Soxhlet-Extraktion ermittelt, über die in kontinuierlicher Extraktion lösliche Inhaltsstoffe aus Polymeren extrahiert werden. Im Falle der Gelwertbestimmung von (wässrigen) Polyacrylat-Haftklebmassen werden durch ein geeignetes Lösemittel wie zum Beispiel Tetrahydrofuran die löslichen Anteile eines Polymers - des sogenannten Sols - von den unlöslichen Anteilen - dem sogenannten Gel - extrahiert. Vorbereitung: Die zu extrahierende Masse wird auf silikonisiertem Trennpapier in einem dünnen Film aufgetragen - in der Regel 120 $\mu$m Schichtdicke - und circa 12 h bei 80 °C getrocknet (Umlufttrockenschrank). Aufbewahrt werden die Filme im Exsikkator über Trocknungsmittel. Die Extraktionshülsen Typ 603 Whatman werden 12 h bei 80 °C getrocknet, das Leergewicht der Hülsen bestimmt und im Exsikkator bis zur Verwendung gelagert.

Gelwertbestimmung

Ca. 1 g Haftklebemasse wird in Extraktionshülse eingewogen. Ein 100 ml Rundkolben der Soxhlet-Apparatur wird mit 60 ml Tetrahydrofuran gefüllt und zum Sieden erhitzt. THF-Dämpfe steigen durch das Dampfrohr der Soxhlet-Apparatur auf und kondensieren im Kühler und THF tropft in die Extraktionshülse und extrahiert Sol Anteil. Im Verlauf der Extraktion läuft das THF I mit dem extrahierten Sol zurück in den Kolben. Gelöstes Sol reichert sich im Kolben zunehmend an. Nach 72 h kontinuierlicher Extraktion ist das Sol vollständig im THF gelöst. Die Extraktionshülse wird nun - nach Abkühlung der Apparatur auf Raumtemperatur - entnommen und über 12 h bei 80 °C getrocknet. Die Hülsen werden bis zur Massekonstanz im Exsikkator aufbewahrt und anschließend ausgewogen. Der Gelwert des Polymers berechnet sich anhand folgender Formel:

$$Gelwert = \frac{m_3 - m_1}{m_2 - m_1} \cdot 100\,\%$$

mit $m_1$: Masse Extraktionshülse, leer
$m_2$: Masse Extraktionshülse + Polymer
$m_3$: Masse Extraktionshülse + Gel

Messung der Klebkraft

Zur Messung der Klebkraft der reinen Dispersionen wurden zunächst Ausstriche der Klebmassen präpariert. Dazu wurden die Dispersionen auf eine PET-Folie (Polyethylenterephthalat) einer Dicke von 23 $\mu$m gegeben und mit einem Filmziehgerät so abgerakelt, dass nach dem Trocknen über 5 Minuten bei 105 °C in einem Umlufttrockenschrank ein Klebmasseflächengewicht von 30 g/m$^2$ resultierte.

Aus diesem Bogen wurden mit einem Cuttermesser Streifen von 20 mm Breite und 25 cm Länge herausgeschnitten. Für die Messung der Klebkraft der Formulierungen mit Harz wurden wie oben beschrieben Ausstriche auf Polyestergewebe herangezogen und ebenfalls mit einem Cuttermesser in Streifen von 20 mm Breite und 25 cm Länge geschnitten. Die Klebkraft auf Stahl der Muster wurde gemäß ASTM D3330 gemessen. Die Klebkraft auf der Rückseite wurde gemäß ASTM D3330 gemessen.

Biegesteifigkeit

Die Biegesteifigkeit wird mit einem Softometer KWS basic 2000mN (Firma Wolf Messtechnik GmbH) bestimmt.

(MD) steht für machine direction, das heißt, die Biegesteifigkeit wird in Maschinenrichtung bestimmt.

**Zusammensetzung einer erfindungsgemäßen Polymerdispersion:**

| Monomer | Polymer A |
|---|---|
| 2-Ethylhexylacrylat | 93 |
| Butylacrylat | |
| Acrylsäure | 4 |
| Acrylnitril | 3 |
| Methylmethacrylat | - |
| Vinylacetat | - |

Die Glasübergangstemperaturen des Polymeres A: -47 °C

Aus dem Polymer A wurden die in Tabelle 1 aufgeführten Haftklebemassen durch Abmischen mit Klebharzdispersionen formuliert. Dabei gibt die Zahl die Gewichtsteile an Klebrigmacher bezogen auf 100 Gewichtsteile Polymer A an (jeweils bezogen auf Feststoffe).

**Tabelle 1: Haftklebemasse umfassend Polymer**

| Klebrigmachertyp | Erweichungspunkt | Polymer A |
|---|---|---|
| | °C | 100 Teile Polymer A zu 45 Teile Harz |
| Kolophoniumesterharz Snowtack 100G, Lawter | 99 | 30 Gew.-% |

Die Glasübergangstemperatur der Haftklebeformulierung wurde als dynamischer Tg mittels rheologischer Untersuchung (Temperatursweep) mit 7 bis 8 °C ermittelt.

Beispiel 1:          Träger: PET-Gewebe, 130 g/m$^2$
                     Kette: 48 Fäden/cm x 167 dtex
                     Schuss: 24 Fäden/cm x 167 dtex

Haftklebmasse:       Harzmodifizierte Acrylatdispersion, 90 g/m$^2$ (Polymer A mit 30% Kolophoniumesterharz)

**+ Zugabe von:**

1.1     2,5 Gew.-% (flüssig auf flüssig) einer Lösung eines synthetischen Schichtsilikats mit 25 Gew.-% Feststoffgehalt, (Laponite SL 25, Firma Rockwood). Dies entspricht 1,1 Gew.-% (fest auf fest) bei einer Feststoffkonzentration der Acrylatdispersion von 57,4 Gew.-%.

1.2     5,0 Gew.-% (flüssig auf flüssig) einer Lösung eines synthetischen Schichtsilikats mit 25 Gew.-% Feststoffgehalt, (Laponite SL 25, Firma Rockwood). Dies entspricht 2,2 Gew.-% (fest auf fest) bei einer Feststoffkonzentration der Acrylatdispersion von 56,54 Gew.-%.

1.3     7,0 Gew.-% (flüssig auf flüssig) einer Lösung eines synthetischen Schichtsilikats mit 25 Gew.-% Feststoffgehalt, (Laponite SL 25, Firma Rockwood). Dies entspricht 3,2 Gew.-% (fest auf fest) bei einer Feststoffkonzentration der Acrylatdispersion von 55,9 Gew.-%.

Vergleichsbeispiel 1:
Träger:       PET-Gewebe, 130 g/m$^2$

(fortgesetzt)

Kette:      48 Fäden/cm x 167 dtex

Schuss:    24 Fäden/cm x 167 dtex

Haftklebmasse:    Harzmodifizierte Acrylatdispersion, 90 g/m$^2$

                      (Polymer A mit 30 Gew.-% Kolophoniumesterharz)

Vergleichsbeispiel 2:

Träger:      PET-Gewebe, 130 g/m$^2$

Kette:       48 Fäden/cm x 167 dtex

Schuss:    24 Fäden/cm x 167 dtex

Haftklebmasse:    Harzmodifizierte Acrylatdispersion, 90 g/m$^2$

                      (Polymer A mit 30 Gew.-% Kolophoniumesterharz)

**+ Zugabe von:**

VG 1.1      5 Gew.-% (fest auf fest) einer feinen Kaolintype

                (Amazon Premium SD, Firma Cadam)

VG 1.2      15 Gew.-% (fest auf fest) einer feinen Kaolintype

                (Amazon Premium SD, Firma Cadam)

VG 1.3      25 Gew.-% (fest auf fest) einer feinen Kaolintype

                (Amazon Premium SD, Firma Cadam)

Vergleichsbeispiel 3:

Träger:      PET-Gewebe, 130 g/m$^2$

Kette:       48 Fäden/cm x 167 dtex

Schuss:    24 Fäden/cm x 167 dtex

Haftklebmasse:    Acrylat-Hotmelt, 90 g/m$^2$

                      UV-Dosis: 25 mJ/cm$^2$

**Tabelle 1: Klebkraft, Abrollkraft und TFT**

| | Zusatz Füllstoff | Klebkraft auf Stahl<br>Methode ASTM D3330<br>N/cm | Klebkraft auf Rückseite<br>Methode ASTM D3330<br>N/cm | Abrollkraft bei 30m/min*<br><br>Methode LV 312<br>N/cm | TFT**<br>Methode<br>(s.o.)<br>min |
|---|---|---|---|---|---|
| Werte zum Beispiel 1 | 2,5 Gew.-% Laponite SL 25 (flüssig auf flüssig) | 5,9 | 4,1 | 3,8 | 1096 |
| | 5,0 Gew.-% Laponite SL 25 (flüssig auf flüssig) | 5,3 | 3,4 | 2,5 | 755 |
| | 7,0 Gew.-% Laponite SL 25 (flüssig auf flüssig) | 4,1 | 1,7 | 1,7 | 507 |

(fortgesetzt)

|  | Zusatz Füllstoff | Klebkraft auf Stahl Methode ASTM D3330 N/cm | Klebkraft auf Rückseite Methode ASTM D3330 N/cm | Abrollkraft bei 30m/min* Methode LV 312 N/cm | TFT** Methode (s.o.) min |
|---|---|---|---|---|---|
| Werte zum Vergleichsbeispiel 1 | - | 5,8 | 4,5 | 6,9 | 1234 |
| Werte zum Vergleichsbeispiel 2 | 5,0 Gew.-% Amazon Premium SD (fest auf fest) | 4,5 | 6,9 | 6,2 |  |
|  | 15,0 Gew.-% Amazon Premium SD (fest auf fest) | 4,5 | 6,9 | 5,6 | 522 |
|  | 25,0 Gew.-% Amazon Premium SD (fest auf fest) | 4,5 | 6,9 | 4,5 |  |
| Werte zum Vergleichsbeispiel 3 | - | 5,5 | 6,5 | 5,8 | 207 |

* alle Rollen wurden bei gleicher Zugspannung geschnitten **TFT = TFT-Wert (Threshold Flagging Time)

Die Versuchsreihe zum Beispiel 1 zeigt eindrucksvoll, wie sich der Zusatz eines organisch modifizierten Schichtsilikats auf die Abrollkräfte eines Haftklebebandes auswirken kann. Durch Zugabe von 2,5 Gew.-% (flüssig auf flüssig) zur Masse resultiert, bei ansonsten gleichen Versuchsparametern, bereits ein Massedesign, welches im Gegensatz zur ursprünglichen, ungefüllten Masse (Vergleichsbeispiel 1) eine Reduzierung der Abrollkraft um 3 N/cm erfährt, was einer prozentualen Abnahme von ca. 45 % entspricht.

Die Klebkräfte auf Stahl und auf eigener Geweberückseite erfahren dagegen keine signifikante Veränderung.

Appliziert auf einem Kabelsatz zeigt ein solches modifiziertes Massedesign keine Schwächen hinsichtlich des Abstehens von Bandenden (Flagging).

Durch Zugabe größerer Mengen des Schichtsilikats lässt sich die Abrollkraft weiter verringern. Bei einer Menge von 5 Gew.-% (flüssig auf flüssig) liegt die Abrollkraft bereits bei ca. 36 % des ursprünglichen Wertes. Die Klebkraft auf glatten Oberflächen (siehe KK Stahl) zeigt bis zu diesem Punkt noch keinen signifikanten Abfall. Bei der rauen Oberfläche der Geweberückseite macht sich die leicht verringerte Fließfähigkeit der Masse eher bemerkbar. Resultat ist eine Abnahme der Klebkraft auf Rückseite um ca. 1 N/cm im Vergleich zur ungefüllten Masse.

Bei hohen Zug- und Biegebeanspruchungen in der Applikation kann ab diesem Zeitpunkt leichtes Flagging auftreten. Durch den Einsatz von weichen Trägermaterialien, die nur eine geringe Rückstellneigung aufweisen, können aber auch noch mit einem solchen Massedesign flaggingfreie Produkt realisiert werden.

Bei Mengen über 5 Gew.-% ist eine "physikalische Übervernetzung" festzustellen. Die Auswirkungen auf die Klebkräfte sind hier nun deutlich, die Klebkraft auf Rückseite nimmt um über 60% ab. Das eh schon geringe Abrollkraftniveau lässt sich kaum noch verringern, weshalb solche Einsatzmengen nicht zum Tragen kommen dürften.

Das Vergleichsbeispiel 2 dient dem Vergleich mit einem gängigen Füllstoff auf Basis Kaolin. Es handelt sich dabei um eine recht feine Kaolintype mit einer durchschnittlichen Partikelgröße von < 2 $\mu$m für den maximalen Durchmesser (mindestens 97 % < 2 $\mu$m).

Im Gegensatz zum gut löslichen organischen modifizierten Schichtsilikat auf Basis Smektit liegt das Kaolin nicht so gut verteilt in der Masse, weshalb es eher als Fremdkörper in Form von uneingebundenen Phasen in der Masse vorliegt. Dadurch kann sich kein dreidimensionales Netzwerk auf Basis physikalischer Bindungen zwischen Polymerketten und Füllstoffpartikeln ausbilden. Infolgedessen ist selbst bei hohen Zugabemengen von 25 Gew.-% (fest auf fest) zur Masse eine vergleichsweise geringe Abnahme der Abrollkraft festzustellen. Die (Sofort-)Klebkraft auf rauen Untergründen leidet dagegen enorm, da die groben Partikel ein rasches Aufließen beim Anpressen des Klebebandes weitestgehend unterbinden. Die Klebkraft auf Rückseite verringert sich demensprechend bei Zugabe der 25 Gew.-% Kaolin auf einen Wert um 40% des Ausgangswertes. In solch einem Fall sind die Auswirkungen auf das Flaggingverhalten dramatisch, da sich das Klebeband bereits kurze Zeit nach Applikation an den Enden aufstellt um die Zug- und Biegespannungen, die bei der Verklebung auftreten, kompensieren zu können.

Das Vergleichsbeispiel 3 dient dem Vergleich mit den klebtechnischen Daten eines marktüblichen Gewebeklebebandes mit einer Acrylat-Hotmeltbeschichtung.

Der Effekt auf die Weichmacher Migration wurde mit dem Massedesign und dem Träger des Beispiels 1 durchgeführt:

Träger: PET-Gewebe, 130 g/m$^2$

Haftklebmasse: Harzmodifizierte Acrylatdispersion, 90 g/m$^2$

(Polymer A mit 30% Kolophoniumesterharz)

Zugabe von

5,0 Gew.-% (flüssig auf flüssig) einer Lösung eines synthetischen Schichtsilikats mit 25 Gew.-% Feststoffgehalt (Laponite SL 25, Firma Rockwood)

entspricht ca. 2,2 Gew.-% fest auf fest (der Feststoffgehalt der fertigen Dispersionsklebmasse/Haftklebemasse beträgt 56,5 Gew.-%)

Als Vergleichsbeispiel dient Vergleichsbeispiel 1, das identisch im Aufbau des Beispiels 1 nur ohne Laponite SL 25 ist.

Träger: PET-Gewebe, 130 g/m$^2$

Haftklebmasse: Harzmodifizierte Acrylatdispersion, 90 g/m$^2$ (Polymer A mit 30 Gew.-% Kolophoniumesterharz).

Tabelle 2: Weichmachergehalt in Gewichtsprozent auf Leitung bezogen (Kabel + Isolierung); PVC Gebauer & Griller, Type 67218

|  | unbeklebt | Vergleichsbeispiel 1 Klebeband ohne Laponite | Beispiel 1 Klebeband mit Laponite SL25 |
|---|---|---|---|
| ungealtert | 21,4 | | |
| 2000h | 19,8 | 12,9 | 18,1 |
| 2500h | 18,8 | 11,6 | 16,7 |
| 3000h | 17,4 | 10,0 | 14,2 |

Zur Erläuterung der Erfindung wurden Beispielklebebänder nach folgendem Schema hergestellt: Die Haftklebstoffdispersionen wurden aus Polymer- und Harzdispersion entsprechend den Beispielrezepturen gemischt und mit einem Rührer innig homogenisiert. Anschließend wurden die Haftklebstoffdispersionen durch Einrühren eines Polyurethan-Assoziativverdickers (Borchigel 0625, OMG Borchers) auf eine Viskosität von ca. 500 Pa*s bei einer Schergeschwindigkeit von 0,01 s$^{-1}$ eingestellt. Mit einem Filmziehgerät wurde ein Polyestergewebe (gemäß den Angaben in den Beispielen) so mit der verdickten Beispielhaftklebstoffdispersion bestrichen, dass nach dem Trocknen in einem Umluftofen bei 85 °C über 5 Minuten ein Klebmasseflächengewicht von ca. 20 g/m$^2$ resultierte. Das in dieser Weise imprägnierte Gewebe wurde in einem zweiten Arbeitsschritt analog mit der gleichen Dispersion bestrichen, so dass nach dem Trocknen in einem Umluftofen bei 85 °C über 10 Minuten ein Klebmassegesamtflächengewicht von 60, 70 oder 90 g/m$^2$ beziehungsweise entsprechend den Angaben in den Beispielen resultierte.

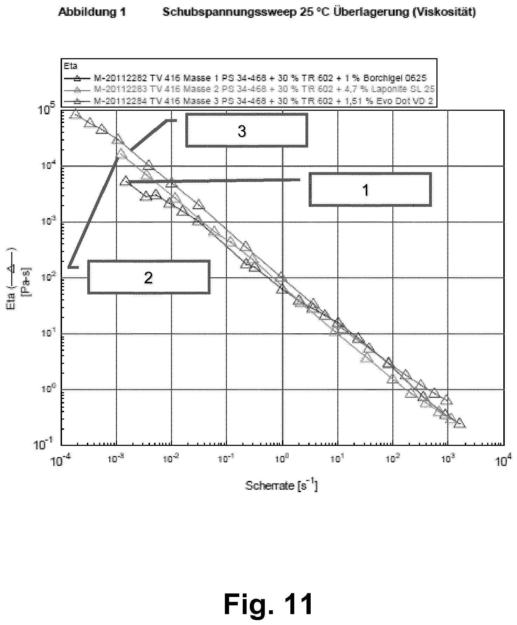

Tabelle 3: Proben SL 25 (Laptonite) - Bestimmung der Viskosität (Fließkurve) bei 25 °C - Rheologie siehe Figur 11:

| **Probenbezeichnung** |
|---|
| TV 416 Masse 1 PS 34-468+30 Gew.-% TR 602 + 1 Gew.-% Borchigel 0625 |
| TV 416 Masse 2 PS 34-468+30 Gew.-% TR 602 + 4,7 Gew.-% SL 25 |
| TV 416 Masse 3 PS 34-468+30 Gew.-% TR 602 + 1,51 Gew-% Evo Dot VD 2 |

Durchführung: Schubspannungssweep (Fließkurve) bei 25 °C mit einem Platte/Kegel-Messsystem, 1. Schubspannungssweep 25 °C, Beim Schubspannungssweep (Figur 11) wurde die Viskosität der Proben abgebildet. Die Werte für die Viskosität bei 2 Scherraten sind aus der Tabelle 4 ersichtlich.

Tabelle 4:

| Probenbezeichnung | Viskosität 0,1 s$^{-1}$ | Viskosität 1000 s$^{-1}$ |
|---|---|---|
| TV 416 Masse 1 PS 34-468+30 Gew.-% TR 602 + 1 Gew.-% Borchigel 0625 (in Figur 11 mit "1" bezeichnet) | 525 Pa s | 0,61 Pa s |
| TV 416 Masse 2 PS 34-468+30 Gew.-% TR 602 + 4,7 Gew.-% SL 25 (in Figur 11 mit "2" bezeichnet) | 485 Pa s | 0,33 Pa s |
| TV 416 Masse 3 PS 34\|468+30 Gew.-% TR 602 + 1,51 Gew.-% Evo Dot VD 2 (in Figur 11 mit "3" bezeichnet) | 1030 Pa s | 0,34 Pa s |

**Fazit und Ausblick:**

Die Proben zeigen das typische Verhalten einer verdickten Dispersionsmassen mit strukturviskosen Eigenschaften.

**LV 312-Prüfung der Prüfung auf Kabelkompatibilität**

Für alle Temperaturklassen B, C, D
Prüfergebnismatrix: Prüflinge beurteilen
Leitungssatz aus dem Ofen nehmen, beurteilen (A), um 20 mm Dorn wickeln, beurteilen (W, K, R, V)J kV-Prüfung durchführen, beurteilen (HS), enttapen (ET, FL. FT, E TS), um 2mm wickeln, beurt. (WKR um 10mm Dorn wickeln, beurteilen (WKRV)

**Auswertung Tabellen 5a, 5b 5c:**

Test ohne Ausfall bestanden: 1
Test bestanden: Band tackt nicht mehr TS
Test nicht bestanden: 0

A: nach Auslagerung, HS: kV-Test negativ, R: Risse im Klebeband, W: Leitung nach Wickeln um den Dorn nicht i.O.; K: Kabelsatz aufgeplatzt; TS: Klebeband tackt nicht mehr; FL: Farbe der Isolierung nicht mehr erkennbar; FT: Verfärbung des Klebebandes (braun), ET: Beim Entfernen des Klebebandes Leitung nicht in Ordnung; V: verschobene Kabelbandlage; E: Beim Entdrillen Leitung nicht in Ordnung.

Vergleichsbeispiel 1, ohne Laponite:

Klebebandbezeichnung: geprüfte Temperaturklasse: T2

Tabelle 5a:

| Prüfgruppe 1<br>Thermische Langzeitalterung | | | | | | | | | | | | | | | | | |
|---|---|---|---|---|---|---|---|---|---|---|---|---|---|---|---|---|---|
| Lagerungs-dauer | 500h | | | 1000h | | | 1500h | | | 2000h | | | 2500h | | | 3336h | | |
| Durchmesser Dorn in mm | 20 | 10 | 2 | 20 | 10 | 2 | 20 | 10 | 2 | 20 | 10 | 2 | 20 | 10 | 2 | 20 | 10 | 2 |
| Leitung Prüfgruppe 1e (PVC, G&G), T = 105 °C | | | | | | | | | | | | | | | | | | |
| Mit Klebeband | 1 | 1 | 1 | 1 | 1 | 1 | 1 | 1 | 1 | 1 | 1 | 0/w | 1 | 0/w | 0/w | 1 | 0/w | 0/w |
| Leitung Prüfgruppe 1e (PVC, Coroplast), T = 105 °C | | | | | | | | | | | | | | | | | | |
| Mit Klebeband | 1 | 1 | 1 | 1 | 1 | 1 | 1 | 1 | 0/w | 1 | 0/w | 0/w | 1 | 0/w | 0/w | 1 | 0/w | 0/w |

Beispiel 1, mit 5 Gew.-% Laponite:

Klebebandbezeichnung: geprüfte Temperaturklasse: T2

Tabelle 5b:

| Prüfgruppe 1 | Thermische Langzeitalterung | | | | | | | | | | | | | | | | | |
|---|---|---|---|---|---|---|---|---|---|---|---|---|---|---|---|---|---|---|
| Lagerungsdauer | 500h | | | 1000h | | | 1500h | | | 2000h | | | 2500h | | | 3336h | | |
| Durchmesser Dorn in mm | 20 | 10 | 2 | 20 | 10 | 2 | 20 | 10 | 2 | 20 | 10 | 2 | 20 | 10 | 2 | 20 | 10 | 2 |
| Leitung Prüfgruppe 1e (PVC, G&G), T = 105 °C | | | | | | | | | | | | | | | | | | |
| Mit Klebeband | 1 | 1 | 1 | 1 | 1 | 1 | 1 | 1 | 1 | 1 | 1 | 1 | 1 | 1 | 1 | 1 | 1 | 0/w |
| Leitung Prüfgruppe 1e (PVC, Coroplast), T = 105 °C | | | | | | | | | | | | | | | | | | |
| Mit Klebeband | 1 | 1 | 1 | 1 | 1 | 1 | 1 | 1 | 1 | 1 | 1 | 1 | 1 | 1 | 1 | 1 | 1 | 0/w |

Referenzmuster ohne Tape:

Klebebandbezeichnung: geprüfte Temperaturklasse: T2

# EP 3 221 411 B1

Tabelle 5c:

| Prüfgruppe 1 | Thermische Langzeitalterung | | | | | | | | | | | | | | | | | |
|---|---|---|---|---|---|---|---|---|---|---|---|---|---|---|---|---|---|---|
| Lagerungsdauer | 500h | | | 1000h | | | 1500h | | | 2000h | | | 2500h | | | 3336h | | |
| Durchmesser Dorn in mm | 20 | 10 | 2 | 20 | 10 | 2 | 20 | 10 | 2 | 20 | 10 | 2 | 20 | 10 | 2 | 20 | 10 | 2 |
| Leitung Prüfgruppe 1e (PVC, G&G), T = 105 °C | | | | | | | | | | | | | | | | | | |
| Mit Klebeband | 1 | 1 | 1 | 1 | 1 | 1 | 1 | 1 | 1 | 1 | 1 | 1 | 1 | 1 | 1 | 1 | 1 | 1 |
| Leitung Prüfgruppe 1e (PVC, Coroplast), T = 105 °C | | | | | | | | | | | | | | | | | | |
| Mit Klebeband | 1 | 1 | 1 | 1 | 1 | 1 | 1 | 1 | 1 | 1 | 1 | 1 | 1 | 1 | 1 | 1 | 1 | 1 |

**Bestimmung des Weichmachergehaltes:**

- Extraktion der Weichmacher mit n-Toluol im Ultraschallbad zur quantitativen Bestimmung

- Ermittlung der Weichmacher mittels GC-MS

- Bestimmungsgrenze 5 mg/kg

**Patentansprüche**

1. Verwendung eines Klebebands zum Ummanteln von langgestrecktem Gut, wobei das Klebeband in einer Schraubenlinie um das langgestreckte Gut geführt wird oder alternativ wobei das langgestreckte Gut in axialer Richtung von dem Band umhüllt wird,
umfassend einen vorzugsweise textilen Träger und eine auf mindestens einer Seite des Trägers aufgebrachte Haftklebemasse,
wobei die Haftklebemasse eine getrocknete Acrylatdispersion umfasst, wobei die Acrylatdispersion die folgende Zusammensetzung aufweist:

   (I) 24 bis 89,9 Gew.-% einer wässrigen polymeren Acrylatdispersion, umfassend Polymere, die aufgebaut sind aus a) monomeren Acrylaten und optional b) ethylenisch ungesättigten Comonomeren, die keine Acrylate sind
   (II) 10 bis 75,9 Gew.-% eines Klebrigmachers und
   (III) 0,1 bis 5 Gew.-% modifizierte Schichtsilikate, in Form einer Lösung oder Dispersion enthaltend modifizierte Schichtsilikate mit definiertem Feststoffgehalt an modifizierten Schichtsilikaten, jeweils in Bezug auf die Gesamtzusammensetzung der Haftklebemasse,

   wobei die Acrylatdispersion einen Feststoffgehalt von 50 bis 60 Gew.-% bezogen auf die wässrige Acrylatdispersion und die Dispersion der Schichtsilikate einen Gehalt an Schichtsilikaten von 20 bis 50 Gew.-% aufweisen.

2. Verwendung nach Anspruch 1,
   **dadurch gekennzeichnet, dass**
   die Acrylatdispersion einen Gelwert von größer gleich 40 %, vorzugsweise größer gleich 45 % bestimmt mittels Soxhlet-Extraktion (gemessen nach der angegebenen Messmethode) aufweist.

3. Verwendung nach Anspruch 1 oder 2,
   **dadurch gekennzeichnet, dass**
   die Haftklebemasse zwischen 15 und 100 Gewichtsteile eines Klebrigmachers (bezogen auf die Masse der getrockneten polymeren Dispersion) enthält.

4. Verwendung nach zumindest einem der Ansprüche 1 bis 3"
   **dadurch gekennzeichnet, dass**

die Acrylatdispersion Polymere umfasst, die aufgebaut sind aus

a) größer gleich 40 Gew.-% monomeren Acrylaten und
b) 0 bis 60 Gew.-% ethylenisch ungesättigten Comonomeren,

wobei die monomeren Acrylate mono-, di- und/oder mehrfunktionelle Acrylate umfassen und wobei die ethylenisch ungesättigten Comonomere ausgewählt sind aus Ethylen enthaltenden Monomeren, vinylfunktionellen Monomeren und ungesättigten Kohlenwasserstoffen mit 3 bis 8 C-Atomen.

5. Verwendung nach zumindest einem der vorherigen Ansprüche,
**dadurch gekennzeichnet, dass**
die Acrylatdispersion Polymere umfasst, die aufgebaut sind aus

(I)

a) monomeren Acrylaten ausgewählt aus 40 bis 90 Gew.-% n-Butylacrylat, 2-Ethylhexylacrylat und/oder Ethylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 60 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion,

oder
(II)

a) monomeren Acrylaten ausgewählt aus 90 bis 99 Gew.-% n-Butylacrylat und/oder 2-Ethylhexylacrylat und 0 bis 2 Gew.-% eines di- oder mehrfunktionellen Monomers, besonders vorzugsweise zu 0 bis 1 Gew.-% eines di- oder mehrfunktionellen Monomers,
b) ethylenisch ungesättigten Comonomeren zu 10 bis 1 Gew.-% ausgewählt aus mindestens einem ethylenisch ungesättigten monofunktionellen Monomer oder einer Mischung dieser und 0 bis 10 Gew.-% eines ethylenisch ungesättigten Monomers mit einer Säure- oder Säureanhydridfunktion,

oder
(III)

a) monomeren Acrylaten ausgewählt aus 30 bis 75 Gew.-%, vorzugsweise 40 bis 60 Gew.-% Alkylacrylester mit $C_4$- bis $C_{12}$-Alkylresten,
b) ethylenisch ungesättigten Comonomeren zu 5 bis 25 Gew.-%, vorzugsweise 10 bis 22 Gew.-% Ethylen, 20 bis 55 Gew.-%, vorzugsweise 28 bis 38 Gew.-% Vinylacetat und 0 bis 10 Gew.-% andere ethylenisch ungesättigte Verbindungen;

wobei die Acrylatdispersion hergestellt wird, indem die Monomere gemäß I, II und/oder III in einer Emulsionspolymerisation umgesetzt werden.

6. Verwendung nach zumindest einem der vorherigen Ansprüche,
**dadurch gekennzeichnet, dass**
die modifizierten Schichtsilikate natürliche oder synthetisch hergestellte Dreischicht-Schichtsilikate sind.

7. Verwendung nach zumindest einem der vorherigen Ansprüche,
**dadurch gekennzeichnet, dass**
die modifizierten Schichtsilikate quellbar sind.

8. Verwendung nach zumindest einem der vorherigen Ansprüche,
**dadurch gekennzeichnet, dass**
die modifizierten Schichtsilikate mit organischen Verbindungen oberflächenmodifiziert sind, insbesondere mit polaren organischen Verbindungen, wobei die Oberflächenmodifizierung im Wesentlichen über polare und/oder ionische Wechselwirkungen erfolgt.

**9.** Verwendung nach zumindest einem der vorherigen Ansprüche,
**dadurch gekennzeichnet, dass**
die modifizierten Schichtsilikate eine Oberfläche (gemessen nach der angegebenen Messmethode) von 50 m$^2$/g bis 1000 m$^2$/g aufweisen, vorzugsweise von 100 bis 600 m$^2$/g, insbesondere um 300 m$^2$/g oder 800 bis 1000 m$^2$/g, besonders bevorzugt um 900 m$^2$/g plus/minus 100 m$^2$/g.

**10.** Verwendung nach zumindest einem der vorherigen Ansprüche,
**dadurch gekennzeichnet, dass**
die auf mindestens einer Seite des Trägers aufgebrachte Haftklebemasse eine Elektronenstrahl (ESH) vernetzte polymere Acrylatdispersion enthält.

**11.** Verwendung nach zumindest einem der vorherigen Ansprüche, **dadurch gekennzeichnet, dass**
der Gehalt an Weichmachern in Gew.-% in Kabelumhüllungen nach mindestens 2000 h noch mindestens 60 % des ursprünglichen Gehaltes in der Kabelumhüllung beträgt, gemessen unter den Bedingungen nach LV 312.

**12.** Verwendung nach zumindest einem der vorherigen Ansprüche zum Ummanteln von langgestrecktem Gut, wobei das Klebeband in einer Schraubenlinie um das langgestreckte Gut geführt wird oder alternativ wobei das langgestreckte Gut in axialer Richtung von dem Band umhüllt wird.

**Claims**

**1.** Use of an adhesive tape for jacketing elongate material, where the adhesive tape is passed in a helical line around the elongate material or alternatively where the elongate material is wrapped in axial direction by the tape, comprising a preferably textile carrier and a pressure-sensitive adhesive applied on at least one side of the carrier, wherein the pressure-sensitive adhesive comprises a dried acrylate dispersion, wherein the acrylate dispersion has the following composition:

(I) 24 to 89.9 wt% of an aqueous polymeric acrylate dispersion, comprising polymers constructed of a) monomeric acrylates and optionally b) ethylenically unsaturated comonomers which are not acrylates,
(II) 10 to 75.9 wt% of a tackifier, and
(III) 0.1 to 5 wt% of modified phyllosilicates, in the form of a solution or dispersion comprising modified phyllosilicates and having a defined modified phyllosilicate solids content, in each case based on the overall composition of the pressure-sensitive adhesive,

wherein the acrylate dispersion has a solids content of 50 to 60 wt% based on the aqueous acrylate dispersion and the dispersion of phyllosilicates has a phyllosilicate content of 20 to 50 wt%.

**2.** Use according to Claim 1,
**characterized in that**
the acrylate dispersion has a gel value of greater than or equal to 40%, preferably greater than or equal to 45%, determined by means of Soxhlet extraction (measured according to the stated measurement method).

**3.** Use according to Claim 1 or 2,
**characterized in that**
the pressure-sensitive adhesive comprises between 15 and 100 parts by weight of a tackifier (based on the mass of the dried polymeric dispersion).

**4.** Use according to at least one of Claims 1 to 3, **characterized in that**
the acrylate dispersion comprises polymers constructed of

a) greater than or equal to 40 wt% of monomeric acrylates and
b) 0 to 60 wt% of ethylenically unsaturated comonomers,

where the monomeric acrylates comprise mono-, di- and/or polyfunctional acrylates and where the ethylenically unsaturated comonomers are selected from ethylene-containing monomers, vinyl-functional monomers, and unsaturated hydrocarbons having 3 to 8 C atoms.

EP 3 221 411 B1

**5.** Use according to at least one of the preceding claims,
**characterized in that**
the acrylate dispersion comprises polymers constructed of

(I)

a) monomeric acrylates selected from 40 to 90 wt% of n-butyl acrylate, 2-ethylhexyl acrylate and/or ethyl acrylate and 0 to 2 wt% of a di- or polyfunctional monomer, more preferably 0 to 1 wt% of a di- or polyfunctional monomer,
b) ethylenically unsaturated comonomers at 10 to 60 wt%, selected from at least one ethylenically unsaturated monofunctional monomer or a mixture thereof and 0 to 10 wt% of an ethylenically unsaturated monomer having an acid or acid-anhydride function, or

(II)

a) monomeric acrylates selected from 90 to 99 wt% of n-butyl acrylate and/or 2-ethylhexyl acrylate and 0 to 2 wt% of a di- or polyfunctional monomer, more preferably 0 to 1 wt% of a di- or polyfunctional monomer,
b) ethylenically unsaturated comonomers at 10 to 1 wt%, selected from at least one ethylenically unsaturated monofunctional monomer or a mixture thereof and 0 to 10 wt% of an ethylenically unsaturated monomer having an acid or acid-anhydride function,

or
(III)

a) monomeric acrylates selected from 30 to 75 wt%, preferably 40 to 60 wt% of alkyl acrylic esters having $C_4$ to $C_{12}$ alkyl radicals,
b) ethylenically unsaturated comonomers at 5 to 25 wt%, preferably 10 to 22 wt% of ethylene, 20 to 55 wt%, preferably 28 to 38 wt%, of vinyl acetate, and 0 to 10 wt% of other ethylenically unsaturated compounds;

where the acrylate dispersion is prepared by reacting the monomers as per I, II and/or III in an emulsion polymerization.

**6.** Use according to at least one of the preceding claims,
**characterized in that**
the modified phyllosilicates are natural or synthetically produced three-layer phyllosilicates.

**7.** Use according to at least one of the preceding claims,
**characterized in that**
the modified phyllosilicates are swellable.

**8.** Use according to at least one of the preceding claims,
**characterized in that**
the modified phyllosilicates are surface-modified with organic compounds, more particularly with polar organic compounds, the surface modification taking place substantially via polar and/or ionic interactions.

**9.** Use according to at least one of the preceding claims,
**characterized in that**
the modified phyllosilicates have a surface area measured according to the stated measurement method(s) of 50 $m^2/g$ to 1000 $m^2/g$, preferably of 100 to 600 $m^2/g$, more particularly around 300 $m^2/g$ or 800 to 1000 $m^2/g$, more preferably around 900 $m^2/g$ plus/minus 100 $m^2/g$.

**10.** Use according to at least one of the preceding claims,
**characterized in that**
the pressure-sensitive adhesive applied on at least one side of the carrier comprises an electron beam (EBC)-crosslinked polymeric acrylate dispersion.

**11.** Use according to at least one of the preceding claims,
**characterized in that**

35

the amount of plasticizers in wt% in cable sheathing after at least 2000 h is still at least 60% of the original amount in the cable sheathing, measured under the conditions of LV 312.

12. Use according to at least one of the preceding claims for jacketing elongate material, where the adhesive tape is passed in a helical line around the elongate material or alternatively where the elongate material is wrapped in axial direction by the tape.

**Revendications**

1. Utilisation d'une bande adhésive pour l'enrobage d'un article allongé, la bande adhésive étant acheminée autour de l'article allongé en une hélice ou, en variante, l'article allongé étant enveloppé dans la direction axiale par la bande, comprenant un support de préférence textile et une masse adhésive sensible à la pression appliquée sur au moins un côté du support,

   la masse adhésive sensible à la pression comprenant une dispersion d'acrylate sèche, la dispersion d'acrylate présentant la composition suivante :

   (I) 24 à 89,9 % en poids d'une dispersion d'acrylate polymère aqueuse, comprenant des polymères qui sont formés par a) des acrylates monomères et éventuellement b) des comonomères éthyléniquement insaturés qui ne sont pas des acrylates,
   (II) 10 à 75,9 % en poids d'un agent collant et
   (III) 0,1 à 5 % en poids de phyllosilicates modifiés, sous la forme d'une solution ou d'une dispersion contenant des phyllosilicates modifiés ayant une teneur en solides définie en phyllosilicates modifiés, à chaque fois par rapport à la composition totale de la masse adhésive sensible à la pression,

   la dispersion d'acrylate présentant une teneur en solides de 50 à 60 % en poids, par rapport à la dispersion d'acrylate aqueuse, et la dispersion des phyllosilicates présentant une teneur en phyllosilicates de 20 à 50 % en poids.

2. Utilisation selon la revendication 1, **caractérisée en ce que** la dispersion d'acrylate présente une valeur de gel supérieure ou égale à 40 %, de préférence supérieure ou égale à 45 %, déterminée par extraction de Soxhlet (mesurée selon la méthode de mesure indiquée).

3. Utilisation selon la revendication 1 ou 2, **caractérisée en ce que** la masse adhésive sensible à la pression contient entre 15 et 100 parties en poids d'un agent collant (par rapport à la masse de la dispersion polymère sèche).

4. Utilisation selon au moins l'une quelconque des revendications 1 à 3, **caractérisée en ce que** la dispersion d'acrylate comprend des polymères qui sont formés par :

   a) une quantité supérieure ou égale à 40 % en poids d'acrylates monomères, et
   b) 0 à 60 % en poids de comonomères éthyléniquement insaturés,

   les acrylates monomères comprenant des acrylates mono-, di- et/ou polyfonctionnels, et les comonomères éthyléniquement insaturés étant choisis parmi les monomères contenant de l'éthylène, les monomères à fonction vinyle et les hydrocarbures insaturés contenant 3 à 8 atomes C.

5. Utilisation selon au moins l'une quelconque des revendications précédentes, **caractérisée en ce que** la dispersion d'acrylate comprend des polymères qui sont formés par :

   (I)

   a) des acrylates monomères choisis parmi 40 à 90 % en poids d'acrylate de n-butyle, d'acrylate de 2-éthylhexyle et/ou d'acrylate d'éthyle, et 0 à 2 % en poids d'un monomère di- ou polyfonctionnel, de manière particulièrement préférée 0 à 1 % en poids d'un monomère di- ou polyfonctionnel,
   b) des comonomères éthyléniquement insaturés à hauteur de 10 à 60 % en poids choisis parmi au moins un monomère monofonctionnel éthyléniquement insaturé ou un mélange de celui-ci et 0 à 10 % en poids d'un monomère éthyléniquement insaturé comprenant une fonction acide ou anhydride d'acide,

   ou

(II)

    a) des acrylates monomères choisis parmi 90 à 99 % en poids d'acrylate de n-butyle et/ou d'acrylate de 2-éthylhexyle et 0 à 2 % en poids d'un monomère di- ou polyfonctionnel, de manière particulièrement préférée 0 à 1 % en poids d'un monomère di- ou polyfonctionnel,
    b) des comonomères éthyléniquement insaturés à hauteur de 10 à 1 % en poids choisis parmi au moins un monomère monofonctionnel éthyléniquement insaturé ou un mélange de celui-ci et 0 à 10 % en poids d'un monomère éthyléniquement insaturé comprenant une fonction acide ou anhydride d'acide,

ou
(III)

    a) des acrylates monomères choisis parmi 30 à 75 % en poids, de préférence 40 à 60 % en poids, d'esters alkylacryliques contenant des radicaux alkyle en $C_4$ à $C_{12}$,
    b) des comonomères éthyléniquement insaturés à hauteur de 5 à 25 % en poids, de préférence 10 à 22 % en poids d'éthylène, 20 à 55 % en poids, de préférence 28 à 38 % en poids d'acétate de vinyle et 0 à 10 % en poids d'autres composés éthyléniquement insaturés ;

la dispersion d'acrylate étant fabriquée par mise en réaction des monomères selon I, II et/ou III dans une polymérisation en émulsion.

6.   Utilisation selon au moins l'une quelconque des revendications précédentes, **caractérisée en ce que** les phyllosilicates modifiés sont des phyllosilicates tricouches naturels ou fabriqués par synthèse.

7.   Utilisation selon au moins l'une quelconque des revendications précédentes, **caractérisée en ce que** les phyllosilicates modifiés sont gonflables.

8.   Utilisation selon au moins l'une quelconque des revendications précédentes, **caractérisée en ce que** les phyllosilicates modifiés sont modifiés en surface avec des composés organiques, notamment avec des composés organiques polaires, la modification de surface ayant lieu essentiellement par des interactions polaires et/ou ioniques.

9.   Utilisation selon au moins l'une quelconque des revendications précédentes, **caractérisée en ce que** les phyllosilicates modifiés présentent une surface (mesurée selon la méthode de mesure indiquée) de 50 $m^2$/g à 1 000 $m^2$/g, de préférence de 100 à 600 $m^2$/g, notamment d'environ 300 $m^2$/g ou de 800 à 1 000 $m^2$/g, de manière particulièrement préférée d'environ 900 $m^2$/g plus ou moins 100 $m^2$/g.

10.  Utilisation selon au moins l'une quelconque des revendications précédentes, **caractérisée en ce que** la masse adhésive sensible à la pression appliquée sur au moins un côté du support contient une dispersion d'acrylate polymère réticulée par faisceau d'électrons (ESH).

11.  Utilisation selon au moins l'une quelconque des revendications précédentes, **caractérisée en ce que** la teneur en plastifiants en % en poids dans des enrobages de câbles après au moins 2 000 h est encore d'au moins 60 % de la teneur initiale dans l'enrobage de câble, mesurée dans les conditions selon LV 312.

12.  Utilisation selon au moins l'une quelconque des revendications précédentes pour l'enrobage d'un article allongé, la bande adhésive étant acheminée autour de l'article allongé en une hélice ou, en variante, l'article allongé étant enveloppé dans la direction axiale par la bande.

Fig. 1

Fig. 2

Fig. 3

10 cm langer Prüfling,
verklebt bis 5 mm über den
höchsten Punkt

$1^{1/2}$″ – Kern

Eigene Rückseite,
mind. $1^{1/2}$-fache Breite
des Prüflings

Fig. 4

Trennpapier

Prüf.Tape

Pappe

Fig. 5

Trennpapier

Hafftgrund-Tape

Prüf-Tape

Pappe

Fig. 6

Prüfdorn

Prüfstreifen

Haftgrund

5mm      5mm

Prüfstreifen

Scheitellinie

## Fig. 7

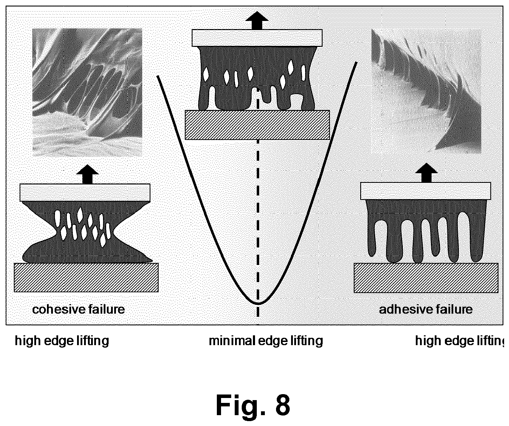

**Fig. 8**

2b

3

4

2a

1

# Fig. 9

d+

d+

d+

d+

d+

# Fig. 10

Abbildung 1       Schubspannungssweep 25 °C Überlagerung (Viskosität)

Fig. 11

Fig. 12

Muster mit          Muster mit          Muster mit

**Fig. 13**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2006015816 A1
- EP 1431360 A2
- DE 102008032570 A1
- JP 2006316085 A
- WO 2012048128 A2
- DE 102011075156 A1
- DE 102011075159 A1
- DE 102011075152 A1
- DE 102011075160 A1
- EP 1378527 B1
- EP 0017986 B1
- EP 0071212 B1
- EP 1448744 A1
- EP 1312097 A1
- EP 1300452 A2
- DE 10229527 A1
- WO 2006108871 A1
- EP 1367608 A2
- EP 1315781 A1
- DE 10329994 A1

### In der Beschreibung aufgeführte Nicht-Patentliteratur

- Schutzsysteme für Leitungssätze in Kraftfahrzeugen, Klebebänder; Prüfrichtlinie. Firmen Daimler, Oktober 2009
- Harness Tape Performance Specification. *Ford-Spezifikation ES-XU5T-1A303-aa,* September 2009
- **ARTUR GOLDSCHMIDT ; HANS-JOACHIM STREITBERGER.** BASF-Handbuch Lackiertechnik. 2002, 337
- **VON PETER A. LOVELL ; MOHAMED S. EI-AASSER.** Emulsion Polymerization and Emulsion Polymers. Wiley-VCH, 1997
- **T.G. FOX.** *Bull. Am. Phys. Soc.,* 1956, vol. 1, 123
- Standardwerken der Beschichtung oder der Vliestechnik wie "Vliesstoffe. Georg Thieme Verlag, 1982
- Textiltechnik-Vliesstofferzeugung. Arbeitgeberkreis Gesamttextil, 1996